# EUROPEAN PATENT APPLICATION

(11) **EP 4 318 453 A1**
(43) Date of publication of application: **07.02.2024**
(21) Application number: 21934864.6
(22) Date of filing: 30.03.2021
(51) Int. Cl.: G09G 5/00, G09G 5/36, G09G 5/377

(54) **INFORMATION PROCESSING DEVICE, INFORMATION PROCESSING METHOD, AND PROGRAM**

(71) Applicant: Sony Group Corporation, Tokyo 108-0075 (JP)
(72) Inventor: TOKUTAKE, Kenji, Tokyo 140-0002 (JP)
(74) Representative: 2SPL Patentanwälte PartG mbB
(86) International application number: PCT/JP2021/013711
(87) International publication number: WO 2022/208695

(57) **Abstract**

An information processing device includes: an acquisition unit that acquires information regarding a movement state of a user; and a display control unit that controls a display mode regarding navigation to the user on the basis of the information regarding the movement state of the user.

## Description

### Field

The present disclosure relates to an information processing device, an information processing method, and a program.

### Background

In recent years, in a case where a user moves to a destination, navigation systems such as a car navigation device and a pedestrian navigation device are often used.

### Citation List

### Patent Literature

Patent Literature 1: JP 2020-20987 A
Patent Literature 2: JP 2020-160968 A

### Summary

### Technical Problem

However, in recent years, conventional navigation systems have increasingly encountered situations where they cannot meet the user's demands. For example, a conventional navigation system indicates a route independently for each of the moving means. For example, a conventional navigation system independently indicates a route in a case where a user moves to a destination by car and a route in a case where the user moves to the destination by walk. However, the number of situations where a user goes to a destination by combining a plurality of moving means (for example, a car and a walk) is increasing. In this case, conventional navigation systems cannot provide navigation desired by the user.

Therefore, the present disclosure proposes an information processing device, an information processing method, and a program capable of providing highly convenient navigation.

### Solution to Problem

In order to solve the above problem, an information processing device according to one aspect of the present disclosure includes: an acquisition unit that acquires information regarding a movement state of a user; and a display control unit that controls a display mode regarding navigation to the user on a basis of the information regarding the movement state of the user.

### Brief Description of Drawings

FIG. 1 is a diagram illustrating a conventional navigation system.
FIG. 2 is a diagram illustrating another example of a conventional navigation system.
FIG. 3 is a diagram illustrating a configuration example of a navigation system according to an embodiment of the present disclosure.
FIG. 4 is a diagram illustrating a configuration example of a server according to an embodiment of the present disclosure.
FIG. 5 is a diagram for explaining a dynamic map.
FIG. 6 is a diagram illustrating a configuration example of a terminal device according to an embodiment of the present disclosure.
FIG. 7 is a diagram illustrating a configuration example of an in-vehicle device according to an embodiment of the present disclosure.
FIG. 8 is a diagram illustrating an outline of an operation of the navigation system.
FIG. 9 is a diagram illustrating a state in which a navigation mode changes according to a change in a movement state of a user.
FIG. 10 is a diagram illustrating display contents in dispatch navigation.
FIG. 11 is a diagram illustrating display contents in outdoor navigation.
FIG. 12 is a diagram illustrating display contents in indoor navigation.
FIG. 13 is a diagram illustrating display contents in manual driving navigation.
FIG. 14 is a diagram illustrating display contents in first automated driving navigation.
FIG. 15 is a diagram illustrating display contents in second automated driving navigation.
FIG. 16 is a diagram summarizing differences in display contents due to differences in a movement state of a user.
FIG. 17 is a view illustrating a state in which an image indicating a traveling direction is superimposed on a sidewalk.
FIG. 18 is a view illustrating a state in which an image indicating a traveling direction is superimposed on a roadway.
FIG. 19 is a flowchart illustrating navigation processing according to the present embodiment.
FIG. 20 is a flowchart for explaining walking navigation processing.
FIG. 21 is a flowchart for explaining car navigation processing.

### Description of Embodiments

Hereinafter, embodiments of the present disclosure will be described in detail with reference to the drawings. Note that, in each of the following embodiments, the same parts are denoted by the same reference numerals, and redundant description will be omitted.

In addition, in the present specification and the drawings, a plurality of configurations having substantially the same functional configuration may be distinguished by attaching different numerals after the same reference numerals. For example, a plurality of configurations having substantially the same functional configuration is distinguished as servers 10₁, 10₂, and 10₃ as necessary. However, in a case where it is not particularly necessary to distinguish each of a plurality of components having substantially the same functional configuration, only the same reference numeral is attached. For example, in a case where it is not necessary to particularly distinguish the servers 10₁, 10₂, and 10₃, they are simply referred to as the server 10.

In addition, the present disclosure will be described according to the following item order.
1. Outline of Present Embodiment
2. Configuration of Navigation System
2-1. Configuration of Server
2-2. Configuration of Terminal Device
2-3. Configuration of In-Vehicle Device
3. Operation of Navigation System
3-1. Outline of Operation
3-2. Navigation Mode
3-3. Display Contents in Each Navigation Mode
3-4. Summary of Difference in Display Contents
3-5. Navigation Processing
4. Modifications
5. Conclusion

### <<1. Outline of Present Embodiments

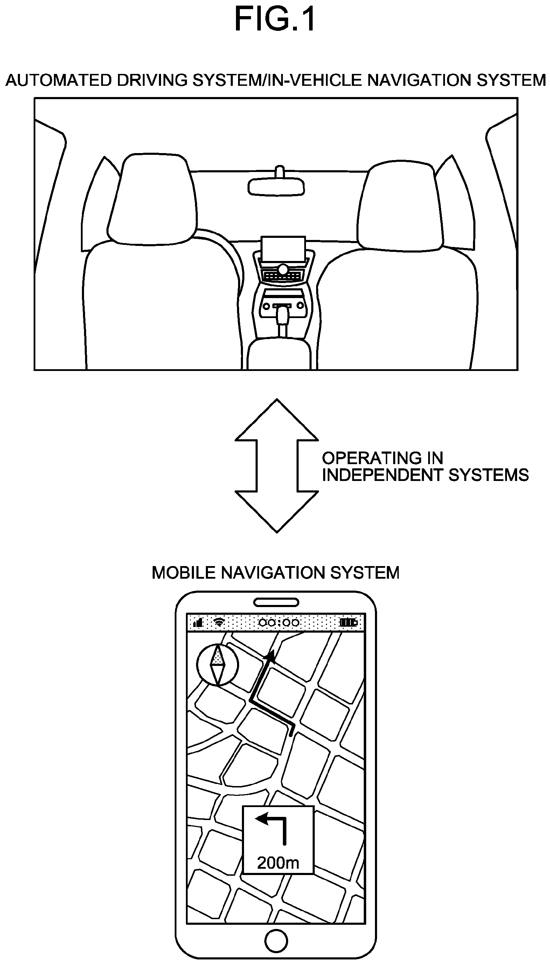

FIG. 1 is a diagram illustrating a conventional navigation system. The upper part of FIG. 1 is an example of a conventional automated driving system/in-vehicle navigation system, and the lower part of FIG. 1 is an example of a conventional mobile navigation system. The navigation performed by the navigation system on the upper side of FIG. 1 is navigation specialized for a case where the user goes to a destination by car (automobile) (hereinafter, also referred to as car navigation). Furthermore, the navigation performed by the navigation system on the lower side of FIG. 1 is a navigation specialized for a case where the user goes to a destination on foot (hereinafter, also referred to as walking navigation). Conventionally, these systems are independent systems. Therefore, these systems cannot cope with a case where the user goes to a destination by combining a plurality of moving means (for example, a car and a walk).

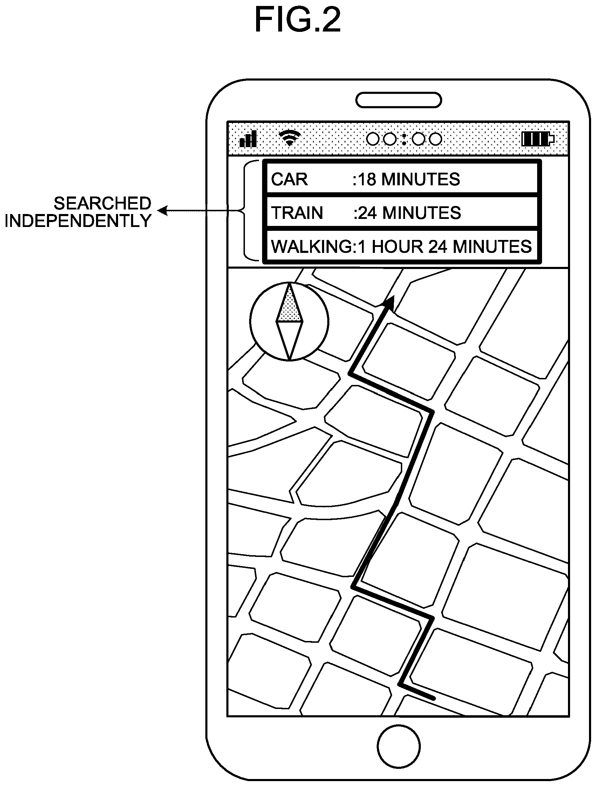

FIG. 2 is a diagram illustrating another example of a conventional navigation system. There are also navigation systems that support a plurality of moving means as illustrated in FIG. 2. However, even in a case where a conventional navigation system supports a plurality of moving means, the search result is independently indicated for each of the moving means. In the example of FIG. 2, the navigation system independently illustrates a search result in a case where the user moves to the destination by car, a search result in a case where the user moves to the destination by train, and a search result in a case where the user moves to the destination by walk. Therefore, the conventional navigation system cannot cope with a case where the user goes to the destination by combining a plurality of moving means.

In particular, the spread of automated driving and the spread of dispatch services are expected in the future. Then, it is assumed that the number of scenes where movement by car is adopted as a part of the moving means will increase in the future.

Therefore, in the present embodiment, the navigation system can control a display mode related to navigation according to the movement state of the user. Specifically, the navigation system of the present embodiment switches the display mode of the navigation to a display mode according to the movement state of the user on the basis of the information regarding the movement state of the user.

For example, in a case where the movement state of the user is the riding state, the navigation system displays the display to the user as navigation (for example, car navigation) according to the riding state. On the other hand, in a case where the movement state of the user is the walking state, the navigation system displays the display to the user as navigation (for example, walking navigation) according to the walking state. The navigation system automatically switches these display modes in a case where the movement state of the user changes.

As a result, the navigation system of the present embodiment can provide navigation according to the moving means even in a case where the user moves to the destination by combining a plurality of moving means. Moreover, since the navigation is automatically switched according to the change in the movement state, the navigation system can provide seamless navigation for the user. As a result, the navigation system of the present embodiment can provide highly convenient navigation for the user.

Note that the navigation system of the present embodiment may automatically switch the display device of the navigation in accordance with the movement state of the user. For example, the navigation system may display navigation on a terminal device possessed by the user in a case where the movement state of the user is a walking state, and then display navigation automatically on the in-vehicle device in a case where the movement state of the user changes to a riding state. In addition, the navigation system may display navigation on the in-vehicle device in a case where the movement state of the user becomes the riding state, and then display navigation automatically on the terminal device in a case where the movement state of the user changes to the walking state. As a result, the navigation system can seamlessly display navigation on an optimal display device suitable for the movement state, so that navigation more convenient for the user can be provided.

Note that AR is expected to become widespread as a navigation display means in the future. Then, it is assumed that a demand for seamless cooperation between independent services of the in-vehicle device and the terminal device increases. Therefore, the navigation system of the present embodiment may display the navigation on the AR glasses worn by the user regardless of whether the movement state of the user is the walking state or the riding state. In this case, the navigation system may switch the navigation displayed in the AR glasses to the navigation according to the movement state at the timing when the movement state of the user is switched. As a result, the navigation system can display navigation more seamlessly, so that navigation with higher convenience can be provided to the user.

The outline of the present embodiment has been described above. The navigation system 1 according to the present embodiment will be described in detail below.

### <<2. Configuration of Navigation System>>

First, the overall configuration of the navigation system 1 will be described.

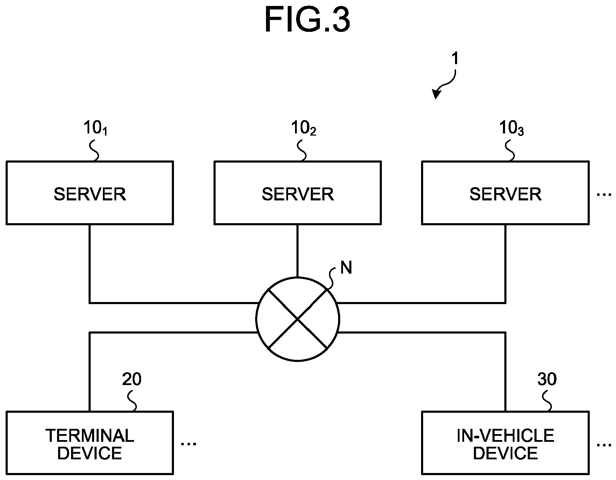

FIG. 3 is a diagram illustrating a configuration example of a navigation system 1 according to an embodiment of the present disclosure. The navigation system 1 is an information processing system that performs processing for providing seamless navigation to a user. The navigation system 1 includes a server 10, a terminal device 20, and an in-vehicle device 30. Note that the devices in the drawings may be considered as devices in a logical sense. That is, a part of the device in the drawing may be realized by a virtual machine (VM), a container, a docker, or the like, and they may be implemented on physically the same hardware.

The server 10, the terminal device 20, and the in-vehicle device 30 each have a communication function and are connected via a network N. The server 10, the terminal device 20, and the in-vehicle device 30 can be rephrased as a communication device. Note that, although only one network N is illustrated in the example of FIG. 3, a plurality of networks N may exist.

Here, the network N is a communication network such as a local area network (LAN), a wide area network (WAN), a cellular network, a fixed telephone network, a regional Internet protocol (IP) network, or the Internet. The network N may include a wired network or a wireless network. In addition, the network N may include a core network. The core network is, for example, an evolved packet core (EPC) or a 5G core network (5GC). In addition, the network N may include a data network other than the core network. The data network may be a service network of a telecommunications carrier, for example, an IP Multimedia Subsystem (IMS) network. Furthermore, the data network may be a private network such as an intra-company network.

The communication devices such as the server 10, the terminal device 20, and the in-vehicle device 30 may be configured to be connected to the network N or another communication device using a radio access technology (RAT) such as long term evolution (LTE), new radio (NR), Wi-Fi, or Bluetooth (registered trademark). At this time, the communication device may be configured to be able to use different radio access technologies. For example, the communication device may be configured to be able to use NR and Wi-Fi. Furthermore, the communication device may be configured to be able to use different cellular communication technologies (for example, LTE and NR). LTE and NR are types of cellular communication technology, and enable mobile communication of a communication device by arranging a plurality of areas covered by base stations in cell shapes.

Note that the communication devices such as the server 10, the terminal device 20, and the in-vehicle device 30 may be connectable to the network N or another communication device using a radio access technology other than LTE, NR, Wi-Fi, or Bluetooth. For example, the communication device may be connectable to the network N or another communication device by using low power wide area (LPWA) communication. Furthermore, the communication device may be connectable to the network N or another communication device by using wireless communication of a proprietary standard. Of course, the communication device may be connectable to the network N or another communication device by using wireless communication of another known standard.

Hereinafter, a configuration of each device constituting the navigation system 1 will be specifically described. Note that the configuration of each device described below is merely an example. The configuration of each device may be different from the following configuration.

### <2-1. Configuration of Server>

First, a configuration of the server 10 will be described.

The server 10 is an information processing device (computer) that performs processing related to navigation of the terminal device 20 and/or the in-vehicle device 30. Any form of computer can be employed as the server 10. For example, the server 10 may be a PC server, a midrange server, or a mainframe server. Furthermore, the server 10 may be an information processing device that performs data processing (edge processing) near the user or the terminal. For example, the information processing device may be an information processing device (computer) provided side by side or built in a base station or a roadside unit. Of course, the server 10 may be an information processing device that performs cloud computing.

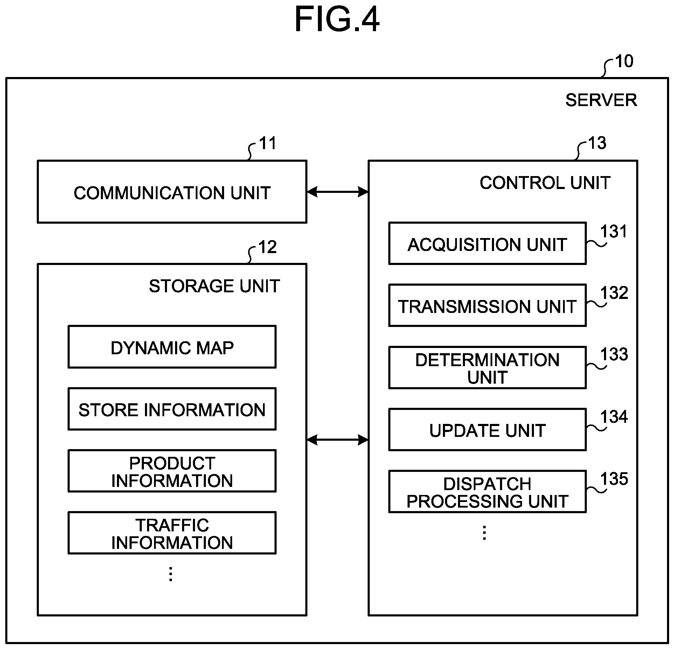

FIG. 4 is a diagram illustrating a configuration example of the server 10 according to the embodiment of the present disclosure. The server 10 includes a communication unit 11, a storage unit 12, and a control unit 13. Note that the configuration illustrated in FIG. 4 is a functional configuration, and the hardware configuration may be different from the functional configuration. Furthermore, the functions of the server 10 may be implemented in a distributed manner in a plurality of physically separated configurations. For example, the server 10 may include a plurality of server devices.

The communication unit 11 is a communication interface for communicating with other devices. For example, the communication unit 11 is a local area network (LAN) interface such as a network interface card (NIC). The communication unit 11 may be a wired interface or a wireless interface. The communication unit 11 communicates with the terminal device 20, the in-vehicle device 30, and the like according to the control of the control unit 13.

The storage unit 12 is a storage device capable of reading and writing data, such as a dynamic random access memory (DRAM), a static random access memory (SRAM), a flash memory, or a hard disk. The storage unit 12 functions as a storage means of the server 10. The storage unit 12 stores, for example, various types of information such as a dynamic map, store information, product information, and traffic information.

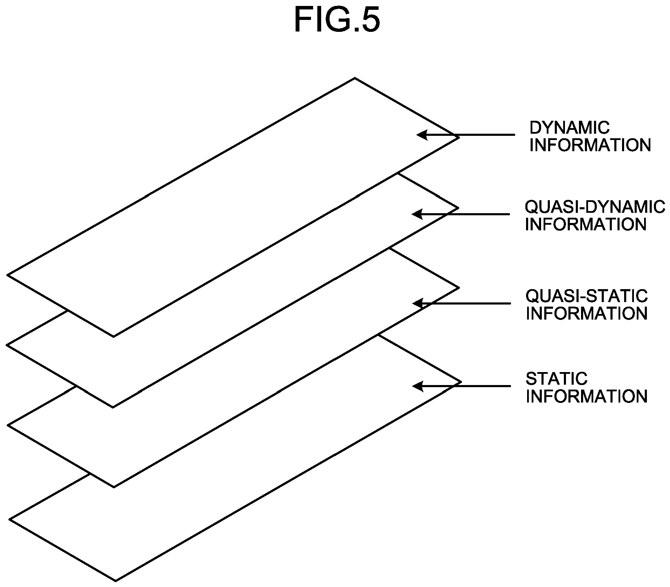

The dynamic map is, for example, a digital map obtained by combining high-precision three-dimensional map information and dynamic data such as structure information on a road and congestion information. FIG. 5 is a diagram for explaining a dynamic map. The dynamic map is configured by, for example, associating dynamic data (quasi-static information, quasi-dynamic information, and dynamic information) including a plurality of layers with high-precision three-dimensional map information (static information) with little temporal change. Here, the static information is, for example, information such as road surface information, lane information, and three-dimensional structure information, and the update frequency thereof is, for example, once or more per month. Furthermore, the quasi-static information is, for example, information such as traffic regulation information, road construction information, and wide area weather information, and the update frequency thereof is, for example, once or more per hour. Furthermore, the quasi-dynamic information is, for example, information such as accident information, congestion information, and narrow area weather information, and the update frequency thereof is, for example, once or more per minute. Furthermore, the dynamic information is, for example, information such as surrounding vehicle information, pedestrian information, and traffic light information, and the update frequency thereof is, for example, real time (for example, one or more times per second).

Returning to FIG. 4, the control unit 13 is a controller that controls each unit of the server 10. The control unit 13 is realized by, for example, a processor such as a central processing unit (CPU), a micro processing unit (MPU), or a graphics processing unit (GPU). For example, the control unit 13 is implemented by a processor executing various programs stored in a storage device inside the server 10 using a random access memory (RAM) or the like as a work area. Note that the control unit 13 may be realized by an integrated circuit such as an application specific integrated circuit (ASIC) or a field programmable gate array (FPGA). Any of the CPU, the MPU, the GPU, the ASIC, and the FPGA can be regarded as a controller.

The control unit 13 includes an acquisition unit 131, a transmission unit 132, a determination unit 133, an update unit 134, and a dispatch processing unit 135. Each block (the acquisition unit 131 to the dispatch processing unit 135) constituting the control unit 13 is a functional block indicating a function of the control unit 13. These functional blocks may be software blocks or hardware blocks. For example, each of the functional blocks described above may be one software module realized by software (microprograms), or may be one circuit block on a semiconductor chip (die). Of course, each functional block may be one processor or one integrated circuit. The control unit 13 may be configured by functional units different from the above-described functional blocks. A configuration method of the functional blocks is arbitrary.

Note that the control unit 13 may be configured by functional units different from the above-described functional blocks. In addition, some or all of the operations of the blocks (the acquisition unit 131 to the dispatch processing unit 135) constituting the control unit 13 may be performed by another device. For example, some or all of the operations of the blocks constituting the control unit 13 may be performed by a control unit 23 of the terminal device 20 or a control unit 33 of the in-vehicle device 30. The operation of each block constituting the control unit 13 will be described later.

### <2-2. Configuration of Terminal Device>

Next, a configuration of the terminal device 20 will be described.

The terminal device 20 is an information processing device configured to be able to communicate with the server 10 and/or the in-vehicle device 30. For example, the terminal device 20 is an xR device such as an augmented reality (AR) device, a virtual reality (VR) device, or a mixed reality (MR) device. At this time, the xR device may be a glasses-type device such as AR glasses or MR glasses, or may be a head-mounted device such as a VR head-mounted display. In a case where the terminal device 20 is an xR device, the terminal device 20 may be a standalone device including only a user wearing portion (for example, the eyeglass portion). Furthermore, the terminal device 20 may be a terminal interlocking device including a user wearing portion (for example, the eyeglass portion) and a terminal portion (for example, a smart device) interlocked with the portion.

Note that the terminal device 20 may be a mobile terminal such as a mobile phone, a smart device (smartphone or tablet), a personal digital assistant (PDA), or a notebook PC. Furthermore, the terminal device 20 may be a wearable device such as a smart watch. In addition, the terminal device 20 may be a portable Internet of Things (IoT) device.

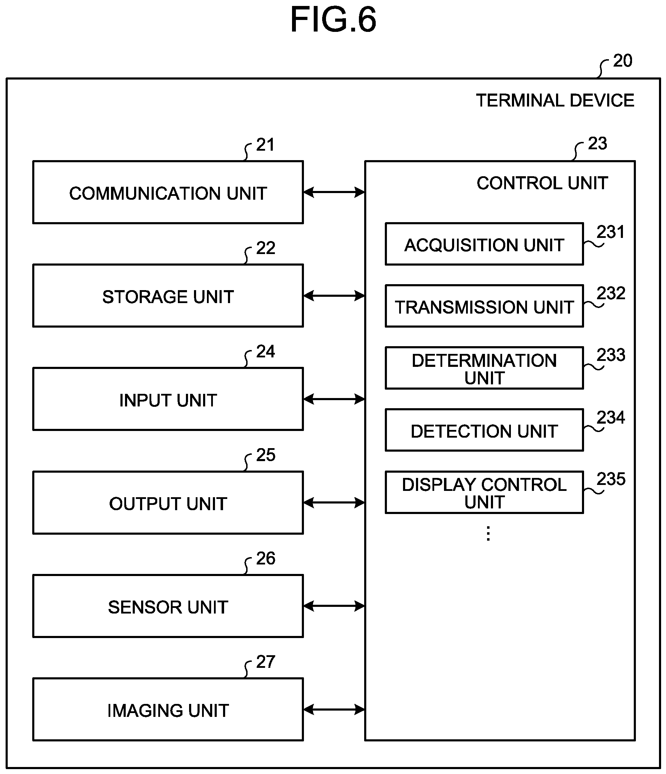

FIG. 6 is a diagram illustrating a configuration example of the terminal device 20 according to the embodiment of the present disclosure. The terminal device 20 includes a communication unit 21, a storage unit 22, a control unit 23, an input unit 24, an output unit 25, a sensor unit 26, and an imaging unit 27. Note that the configuration illustrated in FIG. 6 is a functional configuration, and the hardware configuration may be different from the functional configuration. Furthermore, the functions of the terminal device 20 may be implemented in a distributed manner in a plurality of physically separated configurations.

The communication unit 21 is a communication interface for communicating with other devices. For example, the communication unit 21 is a LAN interface such as an NIC. Note that the communication unit 21 may be a wired interface or a wireless interface. In a case where the communication unit 21 includes a wireless interface, the communication unit 21 may be configured to be connected to the network N or another communication device using a radio access technology (RAT) such as long term evolution (LTE), new radio (NR), Wi-Fi, or Bluetooth (registered trademark). The communication unit 21 communicates with the server 10, the in-vehicle device 30, and the like under the control of the control unit 23.

The storage unit 22 is a storage device capable of reading and writing data, such as a DRAM, an SRAM, a flash memory, or a hard disk. The storage unit 22 functions as a storage means of the terminal device 20.

The control unit 23 is a controller that controls each unit of the terminal device 20. The control unit 23 is realized by, for example, a processor such as a CPU, an MPU, or a GPU. For example, the control unit 23 is realized by a processor executing various programs stored in a storage device inside the terminal device 20 using a RAM or the like as a work area. Note that the control unit 23 may be realized by an integrated circuit such as an ASIC or an FPGA. Any of the CPU, the MPU, the GPU, the ASIC, and the FPGA can be regarded as a controller.

The control unit 23 includes an acquisition unit 231, a transmission unit 232, a determination unit 233, a detection unit 234, and a display control unit 235. Each block (the acquisition unit 231 to the display control unit 235) constituting the control unit 23 is a functional block indicating a function of the control unit 23. These functional blocks may be software blocks or hardware blocks. For example, each of the functional blocks described above may be one software module realized by software (microprograms), or may be one circuit block on a semiconductor chip (die). Of course, each functional block may be one processor or one integrated circuit. The control unit 23 may be configured by functional units different from the above-described functional blocks. A configuration method of the functional blocks is arbitrary.

Note that the control unit 23 may be configured by functional units different from the above-described functional blocks. In addition, some or all of the operations of the blocks (the acquisition unit 231 to the display control unit 235) constituting the control unit 23 may be performed by another device. For example, some or all of the operations of the blocks constituting the control unit 23 may be performed by the control unit 13 of the server 10 and/or the control unit 33 of the in-vehicle device 30. The operation of each block constituting the control unit 23 will be described later.

The input unit 24 is an input device that receives various inputs from the outside. For example, the input unit 24 is an operation device for the user to perform various operations, such as a keyboard, a mouse, and operation keys. Note that, in a case where a touch panel is employed in the terminal device 20, the touch panel is also included in the input unit 24. In this case, the user performs various operations by touching the screen with a finger or a stylus.

The output unit 25 is a device that performs various outputs such as sound, light, vibration, and an image to the outside. The output unit 25 includes a display device that displays various types of information. The display device is, for example, a liquid crystal display or an organic electro luminescence (EL) display. Note that, in a case where a touch panel is adopted as the terminal device 20, the display device may be a device integrated with the input unit 24. Furthermore, in a case where the terminal device 20 is an xR device (for example, AR/MR glasses), it may be a transmission type device that projects an image on the glasses, or may be a retina projection type device that directly projects an image on the retina of the user. The output unit 25 performs various outputs to the user under the control of the control unit 23.

The sensor unit 26 is a sensor that acquires information regarding the position or posture of the terminal device 20. For example, the sensor unit 26 is a global navigation satellite system (GNSS) sensor. Here, the GNSS sensor may be a global positioning system (GPS) sensor, a GLONASS sensor, a Galileo sensor, or a quasizenith satellite system (QZSS) sensor. The GNSS sensor can be rephrased as a GNSS receiving module. Note that the sensor unit 26 is not limited to the GNSS sensor, and may be, for example, an acceleration sensor. Furthermore, the sensor unit 26 may be an inertial measurement unit (IMU) or a geomagnetic sensor. Furthermore, the sensor unit 26 may be a combination of a plurality of these sensors.

The imaging unit 27 is a conversion unit that converts an optical image into an electric signal. The imaging unit 27 includes, for example, an image sensor, a signal processing circuit that processes an analog pixel signal output from the image sensor, and the like, and converts light entering from the lens into digital data (image data). Note that the image captured by the imaging unit 27 is not limited to a video (moving image), and may be a still image. Note that the imaging unit 27 can be rephrased as a camera.

### <2-3. Configuration of In-Vehicle Device>

Next, a configuration of the in-vehicle device 30 will be described.

The in-vehicle device 30 is an information processing device configured to be able to communicate with the server 10 and/or the terminal device 20. The in-vehicle device 30 is a display device mounted on a vehicle on which a user rides. The in-vehicle device 30 is, for example, a car navigation device. The vehicle on which the in-vehicle device 30 is mounted is typically a car (automobile. Note that the concept of a vehicle includes not only an automobile but also a bus, a truck, a bicycle, a motorcycle, a train, and a linear motor car. Note that the vehicle on which the in-vehicle device 30 is mounted may be a vehicle capable of automated driving (for example, an automobile capable of automated driving). In this case, the in-vehicle device 30 may be a display device that performs various displays related to automated driving.

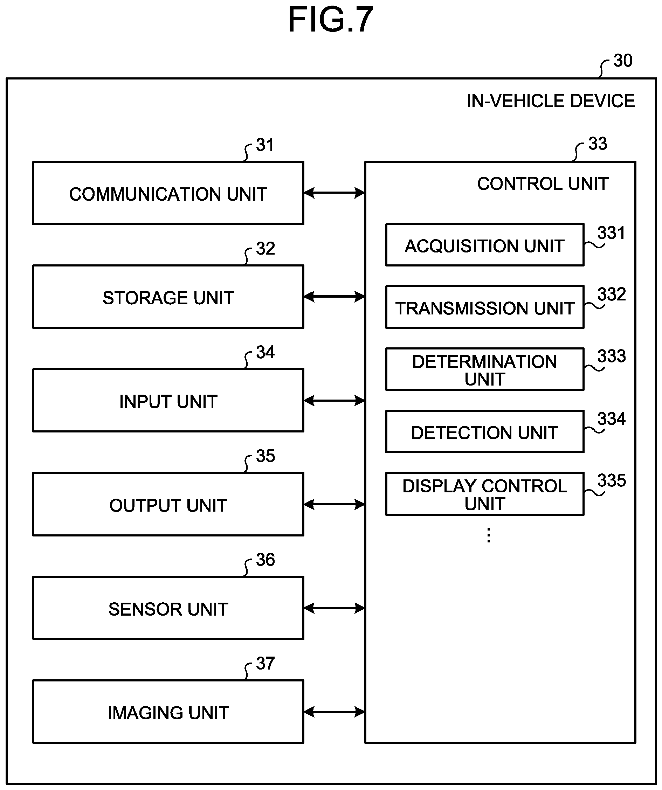

FIG. 7 is a diagram illustrating a configuration example of the in-vehicle device 30 according to the embodiment of the present disclosure. The in-vehicle device 30 includes a communication unit 31, a storage unit 32, a control unit 33, an input unit 34, an output unit 35, a sensor unit 36, and an imaging unit 37. Note that the configuration illustrated in FIG. 7 is a functional configuration, and the hardware configuration may be different from the functional configuration. Furthermore, the functions of the in-vehicle device 30 may be implemented in a distributed manner in a plurality of physically separated configurations.

The communication unit 31 is a communication interface for communicating with other devices. For example, the communication unit 31 is a LAN interface such as an NIC. Note that the communication unit 31 may be a wired interface or a wireless interface. In a case where the communication unit 31 includes a wireless interface, the communication unit 31 may be configured to be connected to the network N or another communication device using a radio access technology (RAT) such as long term evolution (LTE), new radio (NR), Wi-Fi, or Bluetooth (registered trademark). The communication unit 31 communicates with the server 10, the terminal device 20, and the like under the control of the control unit 33.

The storage unit 32 is a storage device capable of reading and writing data, such as a DRAM, an SRAM, a flash memory, or a hard disk. The storage unit 32 functions as a storage means of the in-vehicle device 30.

The control unit 33 is a controller that controls each unit of the in-vehicle device 30. The control unit 33 is realized by, for example, a processor such as a CPU, an MPU, or a GPU. For example, the control unit 33 is realized by a processor executing various programs stored in a storage device inside the in-vehicle device 30 using a RAM or the like as a work area. Note that the control unit 33 may be realized by an integrated circuit such as an ASIC or an FPGA. Any of the CPU, the MPU, the GPU, the ASIC, and the FPGA can be regarded as a controller.

The control unit 33 includes an acquisition unit 331, a transmission unit 332, a determination unit 333, a detection unit 334, and a display control unit 335. Each block (the acquisition unit 331 to the display control unit 335) constituting the control unit 33 is a functional block indicating a function of the control unit 33. These functional blocks may be software blocks or hardware blocks. For example, each of the functional blocks described above may be one software module realized by software (microprograms), or may be one circuit block on a semiconductor chip (die). Of course, each functional block may be one processor or one integrated circuit. The control unit 33 may be configured by functional units different from the above-described functional blocks. A configuration method of the functional blocks is arbitrary.

Note that the control unit 33 may be configured by functional units different from the above-described functional blocks. In addition, some or all of the operations of the blocks (the acquisition unit 331 to the display control unit 335) constituting the control unit 33 may be performed by another device. For example, some or all of the operations of the blocks constituting the control unit 33 may be performed by the control unit 13 of the server 10 and/or the control unit 23 of the terminal device 20.

The input unit 34 is an input device that receives various inputs from the outside. For example, the input unit 34 is an operation device for the user to perform various operations, such as a keyboard, a mouse, and operation keys. Note that, in a case where a touch panel is employed in the in-vehicle device 30, the touch panel is also included in the input unit 34. In this case, the user performs various operations by touching the screen with a finger or a stylus. Furthermore, the input unit 34 may be various operation units (for example, a button or a handle) included in the vehicle, or may be a reception device that receives user's operation information from these operation units.

The output unit 35 is a device that performs various outputs such as sound, light, vibration, and an image to the outside. The output unit 35 includes a display device that displays various types of information. The display device is, for example, a liquid crystal display or an organic electro luminescence (EL) display. Note that, in a case where a touch panel is adopted as the in-vehicle device 30, the display device may be a device integrated with the input unit 34. Furthermore, the output unit 35 may be configured to display (project) an image on a part of a vehicle such as a windshield of an automobile. Note that, in the following description, a device that displays (projects) an image on glass of a vehicle may be referred to as a glass display device. In particular, a device that displays (projects) an image on a windshield of a vehicle (for example, an automobile) may be referred to as a windshield display device. Note that the glass display device can be regarded as a kind of AR device. The output unit 35 performs various outputs to the user under the control of the control unit 33.

The sensor unit 36 is a sensor that acquires information regarding the position or posture of the in-vehicle device 30. For example, the sensor unit 36 is a global navigation satellite system (GNSS) sensor. Here, the GNSS sensor may be a global positioning system (GPS) sensor, a GLONASS sensor, a Galileo sensor, or a quasizenith satellite system (QZSS) sensor. The GNSS sensor can be rephrased as a GNSS receiving module. Note that the sensor unit 36 is not limited to the GNSS sensor, and may be, for example, an acceleration sensor. Furthermore, the sensor unit 36 may be an inertial measurement unit (IMU) or a geomagnetic sensor. Furthermore, the sensor unit 36 may be a sensor that detects a state around a vehicle (for example, an automobile), such as light detection and ranging (LiDAR). Furthermore, the sensor unit 36 may be a sensor that detects a state (speed or remaining energy) of the vehicle. For example, the sensor unit 36 may be a sensor that detects various states (for example, a rotation speed or the like) of a motor provided in the vehicle, or may be a sensor that detects a remaining amount of gasoline or a battery. Furthermore, the sensor unit 36 may be a combination of a plurality of these sensors.

The imaging unit 37 is a conversion unit that converts an optical image into an electric signal. The imaging unit 37 includes, for example, an image sensor, a signal processing circuit that processes an analog pixel signal output from the image sensor, and the like, and converts light entering from the lens into digital data (image data). Note that the image captured by the imaging unit 37 is not limited to a video (moving image), and may be a still image. Note that the imaging unit 37 can be rephrased as a camera. The imaging unit 37 may be a camera that images the inside of the vehicle or a camera that images the outside of the vehicle.

### <<3. Operation of Navigation System>>

The configuration of the navigation system 1 has been described above. Next, the operation of the navigation system 1 will be described.

### <3-1. Outline of Operation>

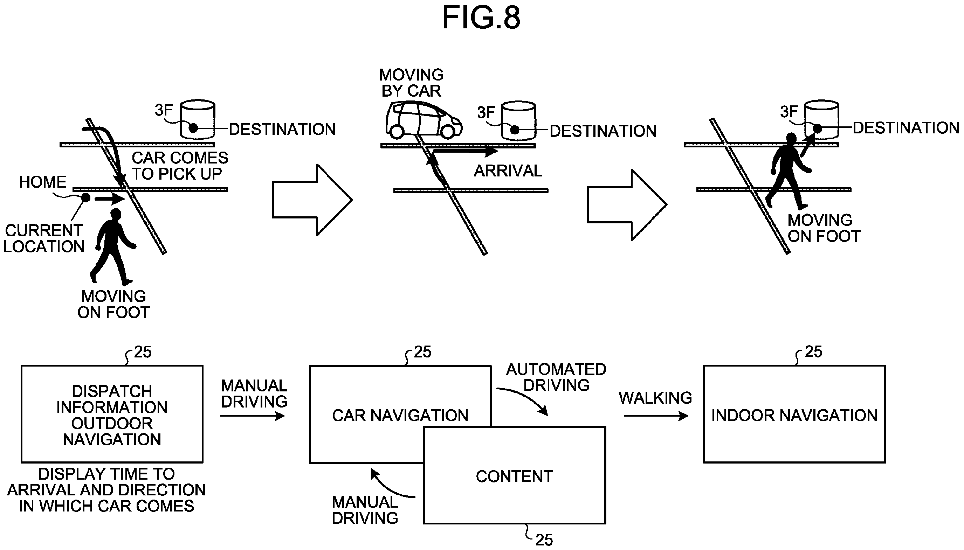

First, an outline of an operation of the navigation system 1 will be described. FIG. 8 is a diagram illustrating an outline of an operation of the navigation system 1.

In the following description, it is assumed that the terminal device 20 includes at least AR glasses, and the navigation is displayed on the AR glasses (also referred to as the output unit 25). The terminal device 20 may include a terminal portion such as a smartphone in addition to an eyeglass portion such as AR glasses. Then, the processing related to the navigation described below may be performed by the terminal portion. In addition, it is assumed that the user moves from the home to the destination. In the example of FIG. 8, the destination is on the third floor of a predetermined building such as a shopping center.

Note that the example illustrated in FIG. 8 is merely an example. The operation of the navigation system 1 is not limited to the example illustrated in FIG. 8. Furthermore, the process related to navigation may be performed by a device other than the terminal device 20. For example, the process related to navigation may be performed by the server 10 connected to the terminal device 20 via the network N. Furthermore, the display device for navigation may be a device other than AR glasses (for example, a display of a smartphone).

Hereinafter, an outline of an operation of the navigation system 1 will be described with reference to FIG. 8.

First, the user searches for a route to a destination using an application installed in the terminal device 20. As a result of the search, in a case where it is necessary to move by car, the user requests dispatch using the application. In the example of FIG. 8, since it is necessary to move by car, the user requests dispatch at home.

The terminal device 20 requests the server 10 to perform dispatch processing in accordance with an instruction of the user. The server 10 performs dispatch processing according to a request from the terminal device 20. Here, if the car to be arranged is a car capable of autonomous traveling, the server 10 may issue an instruction to autonomously head to a dispatch position (a meeting place with the user) set in the car as the dispatch processing. In the following example, it is assumed that the car arranged by the server 10 can perform both manual driving and automated driving. When the instruction is completed, the server 10 transmits information regarding dispatch to the terminal device 20. The information regarding dispatch is, for example, information regarding the dispatch position and information regarding the time when the car arrives at the place.

When receiving the information regarding dispatch from the server 10, the terminal device 20 displays the dispatch information on the output unit 25. Here, the dispatch information is, for example, information of a dispatch position (position information indicating a meeting place) or information of an arranged vehicle (for example, a photograph of a car, and the like). When the dispatch information is displayed on the output unit 25, the user walks to the dispatch position on the basis of the dispatch information displayed on the output unit 25.

Note that the terminal device 20 may start acquisition of information regarding the movement state of the user in accordance with the start of display of the dispatch information. Here, the information regarding the movement state may include information that enables the user to determine which state of a plurality of states including at least the riding state and the walking state the user is in.

The terminal device 20 can acquire information regarding the movement state of the user by various methods. For example, the terminal device 20 may acquire information from the sensor unit 26 as the information regarding the movement state of the user. For example, the terminal device 20 may acquire information from the GNSS sensor or the acceleration sensor as the information regarding the movement state of the user. In this case, the terminal device 20 may determine whether or not the user is in the walking state on the basis of the moving speed of the user detected by the information from the GNSS sensor, the cycle information of the vertical movement of the user detected by the information from the acceleration sensor, and the like. Note that the walking state here is a broad concept including not only a state in which the user is walking (walking state in a narrow sense) but also a state in which the user is running (running state). The walking state can also be referred to as "a movement state on foot" or the like.

Furthermore, the terminal device 20 may acquire information from the communication unit 21 as the information regarding the movement state of the user. For example, the terminal device 20 may acquire information of wireless communication with the in-vehicle device 30 using a radio access technology such as Bluetooth (registered trademark) as the information regarding the movement state of the user. In this case, the terminal device 20 may determine whether or not the user is in the riding state on the basis of whether or not the wireless communication with the in-vehicle device 30 has been successfully performed. For example, in a case where the terminal device 20 can communicate with the in-vehicle device 30 using near field communication such as Bluetooth, it is determined that the user is in the riding state.

Note that the method of determining the movement state of the user is not limited to the above method. Various known methods can be adopted as a method of determining the movement state of the user. Furthermore, the terminal device 20 may determine the movement state of the user by combining a plurality of methods. In the following description, it is assumed that the terminal device 20 always detects the movement state of the user on the basis of the information regarding the movement state of the user.

When the user starts moving, the terminal device 20 causes the output unit 25 to start navigation to the dispatch position (meeting place). Note that the terminal device 20 may start navigation to the dispatch position simultaneously with display of the dispatch information on the output unit 25. Then, the terminal device 20 controls the display mode of navigation in accordance with the movement state of the user. In the example of FIG. 8, since the user moves outdoors on foot, the terminal device 20 controls the display mode of the navigation so as to be a display mode according to the walking state outside. More specifically, the terminal device 20 displays, on the output unit 25, a navigation (hereinafter, referred to as outdoor navigation) suitable for a case where the user moves outdoors on foot. For example, the terminal device 20 may control the display of the output unit 25 so as to display information on the distance to the dispatch position, information on the arrival time in a case of moving on foot, and information on the direction in which the car comes. Furthermore, if the terminal device 20 (or a part of the terminal device 20) is AR glasses, the terminal device 20 may control the display of the AR glasses such that a navigation (for example, an arrow) indicating a direction to the dispatch position is superimposed on a real sidewalk.

Note that, in performing navigation processing, the terminal device 20 may receive a dynamic map related to a movement route of the user (for example, a sidewalk) from the server 10. Then, the terminal device 20 may execute the outdoor navigation on the basis of the dynamic map received from the server 10.

When arriving at the dispatch position (meeting place), the user searches for a car arranged based on the dispatch information (for example, a photograph of a car). When finding the arranged car, the user rides on the found car. Thereafter, the user starts manual driving of the car.

As described above, the terminal device 20 constantly detects the movement state of the user on the basis of the information regarding the movement state of the user. When the movement state of the user changes, the terminal device 20 switches the display mode of the navigation to a display mode according to the movement state of the user. Since the movement state of the user changes from the walking state to the riding state along with the riding of the user, the terminal device 20 switches the display mode of the navigation to a display mode according to the riding state. More specifically, the terminal device 20 displays, on the output unit 25, navigation (hereinafter, referred to as car navigation) suitable for a case where the user moves by car. For example, the terminal device 20 may control the display of the output unit 25 so as to display only minimum information (for example, traffic information (for example, traffic congestion information), route information to a destination, and estimated arrival time) necessary for driving so that the user can concentrate on driving the car. Furthermore, in a case where the terminal device 20 (or a part of the terminal device 20) is AR glasses, the terminal device 20 may control the display of the AR glasses such that navigation (for example, an arrow) indicating a traveling direction is superimposed on a real roadway.

Note that the car navigation may include not only navigation suitable for manual driving but also navigation suitable for automated driving. For example, it is assumed that the user switches the driving of the car from the manual driving to the automated driving. In this case, the terminal device 20 switches the display mode of the navigation from the display mode according to the manual driving to the display mode according to the automated driving. In the case of automated driving, since the user is not driving a car, the terminal device 20 may display a lot of information on the output unit 25. For example, the terminal device 20 may display not only information such as a traffic jam and an estimated arrival time but also information regarding a destination (for example, information regarding a store at a destination). Furthermore, as illustrated in FIG. 8, content such as a movie may be displayed on the output unit 25.

Note that, in a case where the movement state of the user is the riding state, not the terminal device 20 but the in-vehicle device 30 may perform the output to the user. For example, when communication is established between the in-vehicle device 30 and the terminal device 20 by wireless communication such as Bluetooth, the in-vehicle device 30 performs navigation to the user in cooperation with the terminal device 20. At this time, either the in-vehicle device 30 or the terminal device 20 may perform navigation to the user, or both the in-vehicle device 30 and the terminal device 20 may perform navigation to the user. In a case where one of the in-vehicle device 30 and the terminal device 20 performs navigation to the user, the in-vehicle device 30 may take over display of navigation from the terminal device 20 at a timing when the movement state of the user is switched from the walking state to the riding state.

Note that it is also conceivable that a plurality of users displays navigation on each terminal device 20. In this case, the terminal device 20 of each of the plurality of users may continue navigation display (for example, information on a store at a destination). Then, the terminal device 20 may cause the in-vehicle device 30 to display information (for example, congestion information or the like) common to a plurality of users. At this time, the in-vehicle device 30 may display navigation on a display device (for example, the output unit 35 of the in-vehicle device) of the car so that a plurality of users can easily see the navigation. The display device of the car may be a glass display device that performs AR display on a windshield or a side glass.

In addition, also in a case where there is a plurality of persons who get on the vehicle on which the user gets, the terminal device 20 may cause a display device (for example, the output unit 35 of the in-vehicle device 30) of the car to display navigation centering on common information. For example, the terminal device 20 and/or the in-vehicle device 30 detects whether or not a plurality of persons is on the car. Whether or not a plurality of persons is on the car may be detected by the detection unit 234 of the terminal device 20 or the detection unit 334 of the in-vehicle device 30 on the basis of, for example, information from the sensor unit 36 (for example, human sensor) and the imaging unit 37 (for example, a camera that captures an image of a car) of the in-vehicle device 30. Whether or not a plurality of persons is on the car can also be detected by the number of terminal devices 20 having links established with the in-vehicle device 30. Then, the terminal device 20 acquires the detection result from the detection unit 334 or 234. Then, in a case where a plurality of persons is on the car, the terminal device 20 displays navigation on a display device of the car so that the navigation can be easily seen by the plurality of users. In a case where a plurality of persons is not in the car (that is, in a case where only one user is on the car), the navigation may not be displayed on the display device of the car, and the display of the navigation may be continued on the output unit (for example, AR glasses) of the terminal device 20.

When the car arrives in front of the destination building, the user gets off the car and walks to the destination (the third floor of the building). As described above, the terminal device 20 constantly detects the movement state of the user on the basis of the information regarding the movement state of the user. When the movement state of the user changes, the terminal device 20 switches the display mode of the navigation to a display mode according to the movement state of the user. Since the movement state of the user changes from the riding state to the walking state as the user gets off the vehicle, the terminal device 20 switches the display mode of the navigation to a display mode according to the walking state.

Note that the terminal device 20 may determine whether the user is indoors or outdoors on the basis of, for example, information from the sensor unit 26 or the communication unit 21. For example, the terminal device 20 may determine whether the user is indoors or outdoors on the basis of information on whether or not the GNSS sensor can detect the position of the user (whether or not radio waves from a GNSS satellite can be captured), position information of the user captured last by the GNSS sensor, and the like. Furthermore, if the terminal device 20 can use cellular communication, it may be determined whether or not the user is indoors or outdoors on the basis of information on which base station the terminal device 20 is linked to. For example, if the terminal device 20 is linked to a base station installed indoors, it is determined that the user is indoors. On the other hand, if the terminal device 20 is linked to a base station installed outdoors, it is determined that the user is outdoors. Note that the method of determining whether the user is indoors or outdoors is not limited to the above method. Various known methods can be adopted as a method of determining whether the user is indoors or outdoors. Furthermore, the terminal device 20 may determine whether the user is indoors or outdoors by combining a plurality of methods.

In the case of the example of FIG. 8, the user is walking indoors (for example, in a shopping center) toward the destination. Therefore, the terminal device 20 controls the display mode of the navigation so as to be a display mode according to the walking state indoors. More specifically, the terminal device 20 displays, on the output unit 25, a navigation (hereinafter, referred to as indoor navigation) suitable for a case where the user moves indoors on foot. For example, the terminal device 20 may control the display of the output unit 25 so as to display indoor floor information and information on a movement route on each floor. Note that the terminal device 20 may display the information of the stores in the building on the output unit 25. Furthermore, in a case where the terminal device 20 (or a part of the terminal device 20) is AR glasses, the terminal device 20 may control the display of the AR glasses such that navigation (for example, an arrow) indicating a traveling direction is superimposed on a real passage.

When the user arrives at the destination, the terminal device 20 ends the navigation.

### <3-2. Navigation Mode>

The outline of the operation of the navigation system 1 has been described above. Next, the navigation mode of the navigation system 1 will be described.

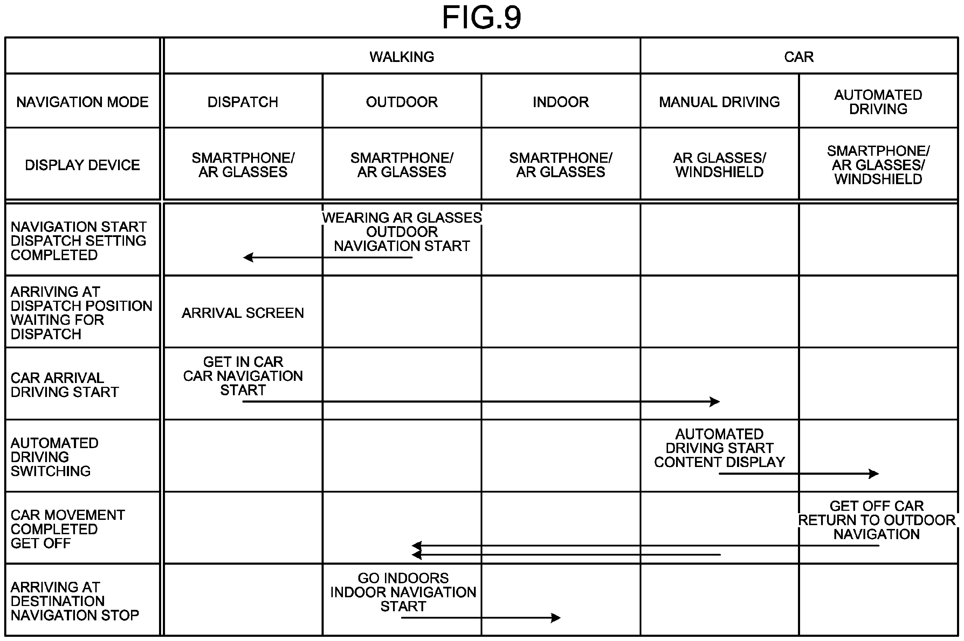

The navigation system 1 has a plurality of navigation modes. The navigation mode corresponds to a movement state of the user, and is switched according to a change in the movement state of the user. The navigation mode can also be referred to as an operation mode. A display mode of navigation is different in each navigation mode. Therefore, the navigation mode can also be referred to as a display mode of navigation. FIG. 9 is a diagram illustrating a state in which the navigation mode changes according to a change in the movement state of the user.

The navigation mode includes walking navigation which is a large display mode suitable for movement on foot and car navigation which is a display mode suitable for movement by car. The walking navigation has three navigation modes of dispatch navigation, outdoor navigation, and indoor navigation. In addition, the car navigation has two navigation modes of manual driving navigation and automated driving navigation. Here, the dispatch navigation is navigation suitable for car arrangement. In addition, the outdoor navigation is a navigation suitable for outdoor walking movement. In addition, indoor navigation is navigation suitable for indoor walking movement. In addition, the manual driving navigation is a navigation suitable for manual driving of a car. In addition, the automated driving navigation is navigation suitable for automated driving of a car.

An optimal display device for displaying navigation is different for each navigation mode. In the case of dispatch navigation, the optimal display device is, for example, a smartphone or AR glasses. In the case of outdoor navigation, the optimal display device is, for example, a smartphone or AR glasses. In the case of indoor navigation, the optimal display device is, for example, a smartphone or AR glasses. In the case of manual driving navigation, the optimal display device is, for example, AR glasses or a car windshield. In the case of automated driving navigation, the optimal display device is, for example, a smartphone, AR glasses, or a windshield of a car.

Note that the optimum display device described herein is merely an example, and the present invention is not limited thereto. For example, the above-described AR glasses can be replaced with AR devices other than the AR glasses. In addition, the above-described smartphone can be replaced with a smart device other than a smartphone, an xR device other than an AR device, a wearable device, or another mobile terminal. Furthermore, the windshield described above can be replaced with a glass (for example, side glass) of a car other than the windshield, or a display included in the in-vehicle device 30.

Hereinafter, the operation of the navigation system 1 will be described with reference to FIG. 9. Note that, in the following description, it is assumed that the terminal device 20 includes at least AR glasses. In addition, it is assumed that the terminal device 20 constantly detects the movement state of the user.

First, when the user wears the AR glasses and performs a predetermined operation, the terminal device 20 starts navigation display. In the example of FIG. 9, since the user is outdoors, the terminal device 20 starts outdoor navigation. When the user operates the terminal device 20 to complete the dispatch setting, the terminal device 20 requests the server 10 for dispatch and starts dispatch navigation based on information (for example, information regarding dispatch, dynamic map, and the like) from the server 10. At this time, the terminal device 20 may display both the dispatch navigation and the outdoor navigation in the AR glasses (or the smartphone) until the user arrives at the dispatch position (meeting place). Note that dispatch navigation may have a function as outdoor navigation. In this case, the dispatch navigation is responsible for navigation to the dispatch position.

When the user arrives at the dispatch position, the terminal device 20 ends the outdoor navigation while continuing the dispatch navigation. Then, while the user waits for the car, the terminal device 20 may display, as dispatch navigation, an arrival screen indicating how the vehicle is moving toward the dispatch position on the AR glasses (or the smartphone). At this time, the terminal device 20 may display information indicating how long the car will come on the arrival screen.

When the car arrives and the user gets in the car, the terminal device 20 detects that the movement state of the user has changed from the walking state (or the dispatch waiting state) to the riding state. Then, the terminal device 20 ends the dispatch navigation, and changes the navigation mode to the display mode according to the riding state. In the present embodiment, the terminal device 20 switches the navigation mode to the car navigation. Note that, in the example of FIG. 9, since the user performs the manual driving after getting in the vehicle, the terminal device 20 switches the navigation mode to the manual driving navigation. At this time, the terminal device 20 may perform manual driving navigation processing on the basis of information (for example, a dynamic map or the like) from the server 10. At this time, the navigation to the user may be displayed in the AR glasses or may be displayed on the windshield of the car.

Note that, in changing the display mode of navigation, the terminal device 20 and the in-vehicle device 30 may cooperate to switch navigation. For example, when detecting that the user gets on the vehicle, the terminal device 20 transmits information regarding the navigation so far to the in-vehicle device 30. At this time, the terminal device 20 may transmit the information regarding the navigation via the server 10 or may directly transmit the information to the in-vehicle device. Then, the in-vehicle device 30 starts navigation on the basis of the information received from the terminal device 20, and notifies the terminal device 20 that the navigation has started. The terminal device 20 may stop navigation when receiving the notification from the in-vehicle device. Note that the terminal device 20 does not necessarily need to end the navigation. Navigation may be displayed on both the terminal device 20 and the in-vehicle device 30.

In a case where the arranged car is a car capable of automated driving, the user can switch the driving of the car from manual driving to automated driving as necessary. Here, when the user switches the driving of the car to the automated driving, the terminal device 20 and/or the in-vehicle device 30 changes the navigation mode to the display mode according to the automated driving. In the example of FIG. 9, the terminal device 20 and/or the in-vehicle device 30 switches the navigation mode to the automated driving navigation. At this time, the terminal device 20 and/or the in-vehicle device 30 may perform processing of automated driving navigation on the basis of information (for example, a dynamic map or the like) from the server 10. At this time, the navigation may be displayed on the smartphone, may be displayed on the AR glasses, or may be displayed on the windshield of the car. In the case of automated driving, since the user does not drive the car by himself/herself, in some cases, the terminal device 20 and/or the in-vehicle device 30 can present a lot of information to the user. Therefore, in the case of automated driving, the terminal device 20 and/or the in-vehicle device 30 may display content such as a movie on the screen according to the operation of the user.

When the car arrives in front of the destination, the user gets off the car. Then, the terminal device 20 and/or the in-vehicle device 30 detects that the movement state of the user has changed from the riding state to the walking state. When detecting the change to the walking state, the terminal device 20 and/or the in-vehicle device 30 changes the navigation mode to the display mode according to the movement state of the user. In the example of FIG. 9, since the user is outside the car, the terminal device 20 switches the navigation mode to the outdoor navigation.

When the user enters indoors (in a building having a destination), the terminal device 20 detects that the movement state of the user changes from outdoors to indoors. Then, the terminal device 20 changes the navigation mode to a display mode according to the walking state indoors. In the example of FIG. 9, the terminal device 20 switches the navigation mode from the outdoor navigation to the indoor navigation. The user moves indoors according to the indoor navigation. When the user arrives at the indoor destination (for example, in front of a store), the terminal device 20 terminates the navigation.

### <3-3. Display Contents in Each Navigation Mode>

The navigation mode has been described above. Next, display contents in each navigation mode will be described below.

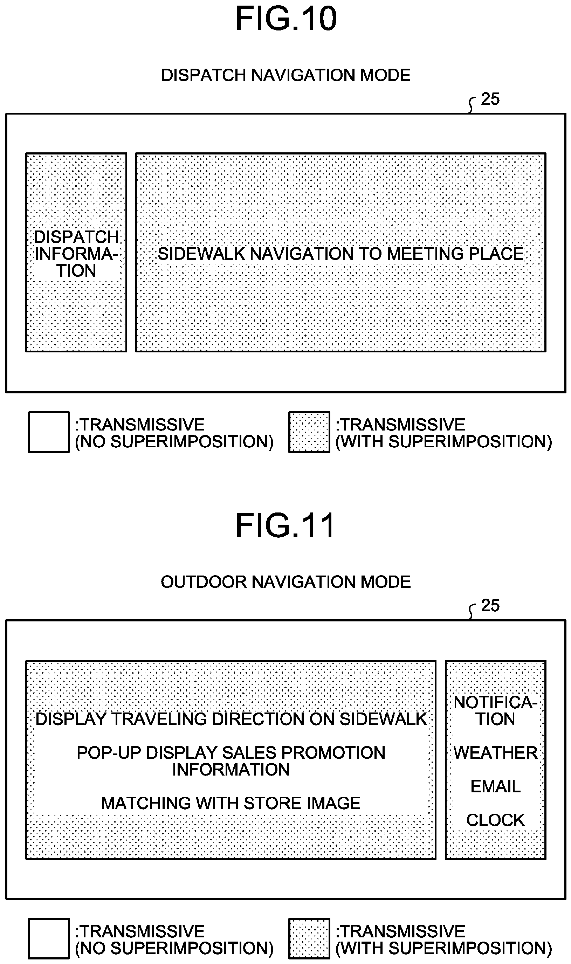

FIGS. 10 to 15 are diagrams illustrating display contents in the respective navigation modes. Note that, in the following description, as an example, it is assumed that the terminal device 20 includes at least an AR device such as AR glasses, and the terminal device 20 displays navigation on the AR device.

The navigation system 1 of the present embodiment has, for example, the following navigation modes (1) to (6) .
(1) Dispatch Navigation
(2) Outdoor Navigation
(3) Indoor Navigation
(4) Manual Driving Navigation
(5) First Automated Driving Navigation
(6) Second Automated Driving Navigation

Hereinafter, display contents of navigation in the respective navigation modes (1) to (6) will be described with reference to FIGS. 10 to 15. Note that, in the following description, navigation modes that operate in the case of automated driving, such as first automated driving navigation and second automated driving navigation, may be collectively referred to as an automated driving navigation mode.

### (1) Dispatch Navigation

FIG. 10 is a diagram illustrating display contents in dispatch navigation. Dispatch navigation is, for example, a navigation mode that operates in a case where the user moves to the dispatch position on foot. Dispatch navigation can also be regarded as a type of walking navigation (outdoor navigation or indoor navigation). In a case where the dispatch navigation is operated, the user is moving on foot, and thus needs to pay attention to the surrounding situation to some extent. Meanwhile, the user needs to receive a certain amount of information (for example, route information to the dispatch position, information for finding the arranged car, and the like) when moving to the dispatch position. Therefore, the terminal device 20 displays a medium amount of information.

In the example of FIG. 10, the terminal device 20 displays dispatch information in a small region on the left side of the AR glasses, and also displays sidewalk navigation to a dispatch position (meeting place) in a large region on the right side of the AR glasses. In the drawing, a region hatched with dots is a region where a user interface (UI) is superimposed, and a region not hatched is a region where the UI is not superimposed. Note that, in a case where the information is displayed on the AR device such as the AR glasses, the terminal device 20 may set the display region of these pieces of information to the transmissive state. In this case, the terminal device 20 controls the display mode such that the navigation (for example, an arrow) indicating the traveling direction is superimposed on the real sidewalk. Note that, in a case where the display device is not an AR device such as AR glasses (for example, in the case of a smart device or a VR device), the terminal device 20 may control a display mode such that navigation (for example, an arrow) indicating a traveling direction is superimposed on a sidewalk on a screen (for example, a non-transmissive display) .

### (2) Outdoor Navigation

FIG. 11 is a diagram illustrating display contents in outdoor navigation. The outdoor navigation is a navigation mode that operates in a case where the movement state of the user is an outdoor walking state. In a case where the outdoor navigation is operated, since the user is moving on foot, the user has to pay attention to the surrounding situation to some extent. Meanwhile, the user needs to receive a certain amount of information (for example, route information to the destination, and the like) when moving to the destination. Therefore, the terminal device 20 displays a medium amount of information.

In the example of FIG. 11, the terminal device 20 displays information regarding a route to a destination and a destination in a large region on the left side of the AR glasses while displaying general information such as various notifications, weather, emails, and clocks in a small region on the right side of the AR glasses. In the drawing, a region hatched with dots is a region where the UI is superimposed, and a region not hatched is a region where the UI is not superimposed. In the example of FIG. 11, the terminal device 20 displays the traveling direction on the sidewalk as the route information. Note that, in a case where the information is displayed on the AR device such as the AR glasses, the terminal device 20 may set the display region of these pieces of information to the transmissive state. In this case, the terminal device 20 may control the display mode such that navigation (for example, an arrow) indicating the traveling direction is superimposed on the real sidewalk. Note that, in a case where the display device is not an AR device such as AR glasses (for example, in the case of a smart device or a VR device), the terminal device 20 may control a display mode such that navigation (for example, an arrow) indicating a traveling direction is superimposed on a sidewalk on a screen (for example, a non-transmissive display).

In addition, the terminal device 20 may control a display mode of navigation so as to display information regarding a destination. For example, the terminal device 20 may display information of a destination store as a part of navigation. For example, the terminal device 20 may pop-up display sales promotion information of the destination store on the screen, or may display a matching result with the store image on the screen. Note that, in a case where the user is in the walking state (for example, in a case of a movement state in which the outdoor navigation is operated), the terminal device 20 may display not only the information of the destination store but also the information of the stores currently near the user.

### (3) Indoor Navigation

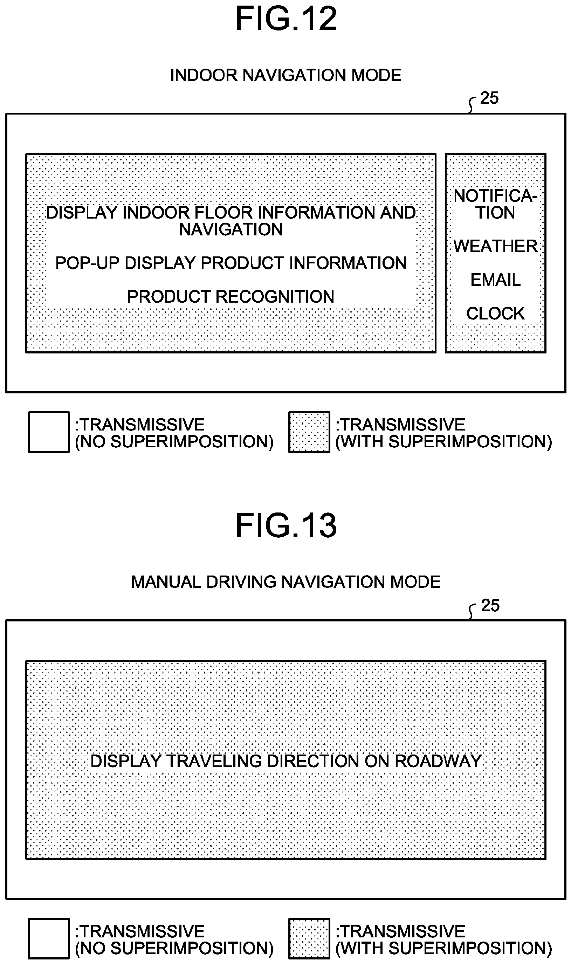

FIG. 12 is a diagram illustrating display content in indoor navigation. The indoor navigation is a navigation mode that operates in a case where the movement state of the user is an indoor walking state. In a case where the outdoor navigation is operated, since the user is moving on foot, the user has to pay attention to the surrounding situation to some extent. Meanwhile, the user needs to receive a certain amount of information (for example, route information to the destination, and the like) when moving to the destination. Therefore, the terminal device 20 displays a medium amount of information.

In the example of FIG. 12, the terminal device 20 displays general information such as various notifications, weather, emails, and clocks in a small region on the right side of the AR glasses, and displays indoor floor information and route information to a destination in a large region on the left side of the AR glasses. For example, the terminal device 20 displays the traveling direction on an indoor passage as the route information. In the drawing, a region hatched with dots is a region where the UI is superimposed, and a region not hatched is a region where the UI is not superimposed. Note that, in a case where the information is displayed on the AR device such as the AR glasses, the terminal device 20 may set the display region of these pieces of information to the transmissive state. In this case, the terminal device 20 may control the display mode such that navigation (for example, an arrow) indicating the traveling direction is superimposed on the real passage. Note that, in a case where the display device is not an AR device such as AR glasses (for example, in the case of a smart device or a VR device), the terminal device 20 may control a display mode such that navigation (for example, an arrow) indicating a traveling direction is superimposed on a passage on a screen (for example, a non-transmissive display).

In addition, the terminal device 20 may control a display mode of navigation so as to display information regarding a destination. For example, the terminal device 20 may display information of a destination store as a part of navigation. For example, the terminal device 20 may pop-up display the product information of the destination store on the screen, or may display the recognition result of the product on the screen. Note that, in a case where the user is in the walking state (for example, in a case of a movement state in which the indoor navigation operates), the terminal device 20 may display not only the product information of the destination store but also the product information of other stores located indoors.

### (4) Manual Driving Navigation

FIG. 13 is a diagram illustrating display contents in manual driving navigation. The manual driving navigation is a navigation mode that operates in a case where the movement state of the user is the riding state and in a case where the user is manually driving. In a case where manual driving navigation is operated, the user must be extremely attentive to the surrounding situation because he/she must concentrate on driving the car. Therefore, the terminal device 20 displays the minimum amount of information.

In the example of FIG. 13, the terminal device 20 displays route information (for example, a map indicating a route, an arrow indicating a traveling direction, traffic information, estimated arrival time, and the like) to a destination in AR glasses. For example, the terminal device 20 displays the traveling direction on the roadway as the route information. In the drawing, a region hatched with dots is a region where the UI is superimposed, and a region not hatched is a region where the UI is not superimposed. Note that the terminal device 20 may make the size of the display region of the route information smaller than the size of the display region of the route information in other navigation modes (for example, the automated driving navigation mode) so that the user can easily concentrate on driving. Furthermore, in a case where information is displayed on an AR device such as AR glasses, the display region of the route information may be set to the transmissive state. In this case, the terminal device 20 may control the display mode such that navigation (for example, an arrow) indicating the traveling direction is superimposed on the real roadway. Note that the in-vehicle device 30 may display the route information. For example, the in-vehicle device 30 may display the route information on the windshield of the car. In this case, the in-vehicle device 30 may control the display mode such that navigation (for example, an arrow) indicating the traveling direction is superimposed on the real roadway. Furthermore, in a case where the display device is not an AR device such as AR glasses or a windshield display device (for example, in the case of a smart device or a VR device), the terminal device 20 and/or the in-vehicle device 30 may control the display mode such that navigation (for example, an arrow) indicating a traveling direction is superimposed on a roadway on a screen (for example, a non-transmissive display).

In addition, the terminal device 20 may control a display mode of navigation so as to display information regarding a destination. For example, the terminal device 20 may display information of a destination store as a part of navigation. For example, the terminal device 20 may pop-up display the product information of the destination store on the screen, or may display the recognition result of the product on the screen. Note that, in a case where the user is in the walking state (for example, in a case of a movement state in which the indoor navigation operates), the terminal device 20 may display not only the product information of the destination store but also the product information of other stores located indoors.

### (5) First Automated Driving Navigation

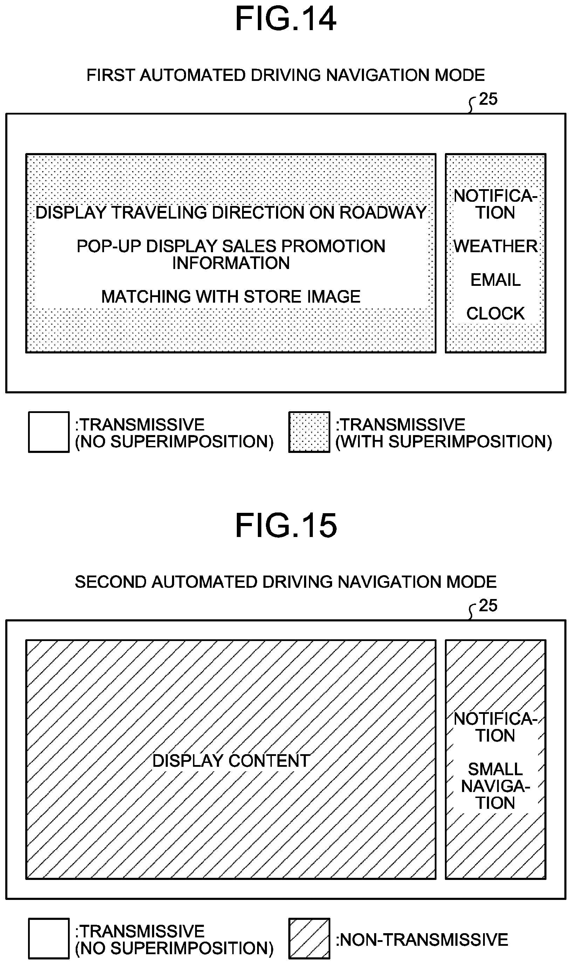

FIG. 14 is a diagram illustrating display contents in first automated driving navigation. The first automated driving navigation is a navigation mode that operates in a case where the movement state of the user is the riding state and in a case where the car on which the user rides is automatedly driven. The first automated driving navigation is one of automated driving navigation modes selectable by the user. In a case where the first automated driving navigation operates, the user is not driving, and thus, in many cases, the user does not have to pay much attention to the surrounding situation. However, there are cases where the user needs to pay attention to the surroundings, such as a case where the user intends to switch the driving of the car from the automated driving to the manual driving. Moreover, in this case, the user also needs to receive a certain amount of information (for example, route information to the destination, and the like). Therefore, in the first automated driving navigation, in order to cope with such a situation, the terminal device 20 displays a medium amount of information.

In the example of FIG. 14, the terminal device 20 displays information regarding a route to a destination and a destination in a large region on the left side of the AR glasses while displaying general information such as various notifications, weather, emails, and clocks in a small region on the right side of the AR glasses. In the example of FIG. 14, the terminal device 20 displays the traveling direction on the roadway as the route information. In the drawing, a region hatched with dots is a region where the UI is superimposed, and a region not hatched is a region where the UI is not superimposed. Note that, in a case where the information is displayed on the AR device such as the AR glasses, the terminal device 20 may set the display region of these pieces of information to the transmissive state. In this case, the terminal device 20 may control the display mode such that navigation (for example, an arrow) indicating the traveling direction is superimposed on the real roadway. Note that the in-vehicle device 30 may display the route information. For example, the in-vehicle device 30 may display the route information on the windshield of the car. In this case, the in-vehicle device 30 may control the display mode such that navigation (for example, an arrow) indicating the traveling direction is superimposed on the real roadway. Note that, in a case where the display device is not an AR device such as AR glasses or a windshield display device (for example, in the case of a smart device or a VR device), the terminal device 20 and/or the in-vehicle device 30 may control the display mode such that navigation (for example, an arrow) indicating a traveling direction is superimposed on a roadway on a screen (for example, a non-transmissive display).

In addition, the terminal device 20 may control a display mode of navigation so as to display information regarding a destination. For example, the terminal device 20 may display information of a destination store as a part of navigation. For example, the terminal device 20 may pop-up display sales promotion information of the destination store on the screen, or may display a matching result with the store image on the screen. Note that, in a case where the user is in a movement state in which the automated driving navigation is operated, the terminal device 20 may display not only the information of the destination store but also the information of the stores currently near the user.

### (6) Second Automated Driving Navigation

FIG. 15 is a diagram illustrating display contents in second automated driving navigation. The second automated driving navigation is a navigation mode that operates in a case where the movement state of the user is the riding state and in a case where the car on which the user rides is automatedly driven. The second automated driving navigation is one of automated driving navigation modes selectable by the user. In a case where the second automated driving navigation is operated, the user is not driving, and therefore does not need to pay much attention to the surrounding situation. In some cases, there may be a situation where the user can be immersed in a moving image or the like away from driving the car. Therefore, in the second automated driving navigation, the terminal device 20 displays a large amount of information according to the operation of the user.

In the example of FIG. 15, the terminal device 20 displays content such as a moving image in a large region on the left side of the AR glasses while displaying various notifications and small navigation in a small region on the right side of the AR glasses. Note that, in order to allow the user to be immersed in the content, the terminal device 20 may set the display region of these pieces of information to the non-transmissive state. In the drawing, a hatched region is a non-transmissive region where the UI is displayed, and other regions are transmissive regions where the UI is not superimposed.

### <3-4. Summary of Difference in Display Contents>

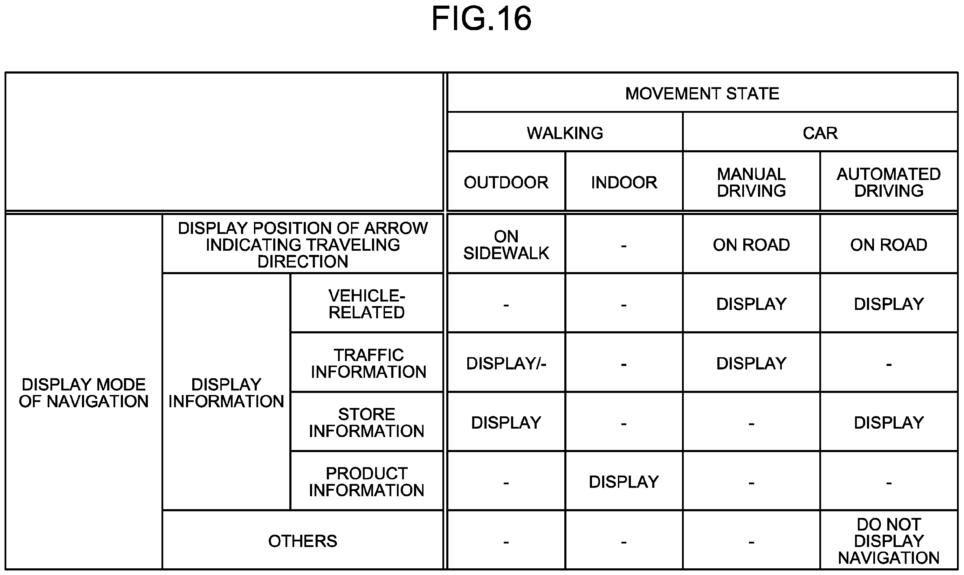

The display content in each navigation mode has been described above. FIG. 16 summarizes the difference in display content on the basis of the movement state of the user. FIG. 16 is a diagram summarizing differences in display contents due to differences in a movement state of a user. Specifically, FIG. 16 is a diagram summarizing differences in display content in a state where the user's movement state is as illustrated in the following (1) to (4) .
(1) Walking State (Outdoor)
(2) Walking State (Indoor)
(3) Riding State (Manual Driving)
(4) Riding State (Automated Driving)

Note that the contents illustrated in FIG. 16 are merely examples, and are not intended to limit the contents described above or described in <3-4> and the following. Furthermore, the contents illustrated in FIG. 16 are merely typical examples, and may be different from the contents described above or the contents illustrated in <3-4> and the following. Furthermore, here, the device that displays navigation is assumed to be the terminal device 20 as an example, but the device that displays navigation may be the in-vehicle device 30. Hereinafter, display contents of navigation in the respective movement states illustrated in (1) to (4) will be described with reference to FIG. 16.

### (1) Walking State (Outdoor)

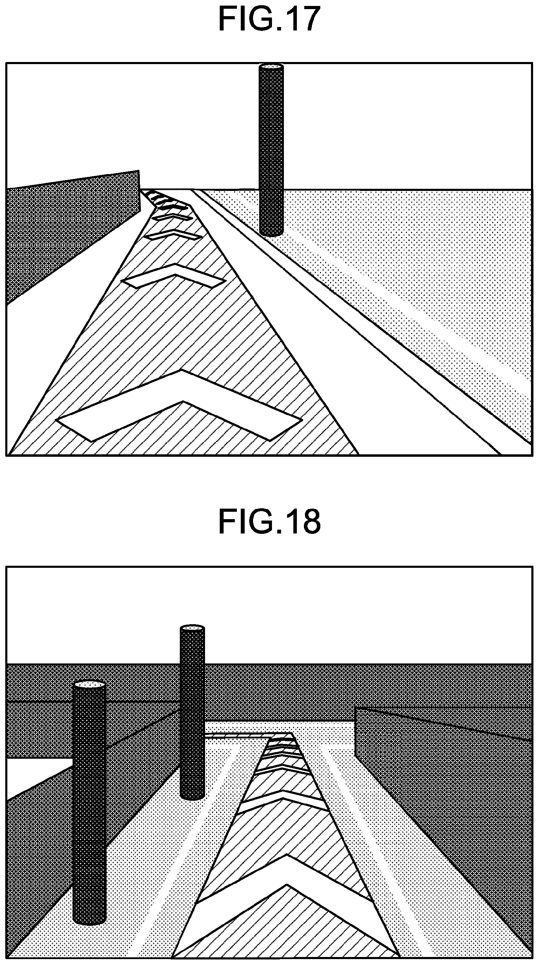

In a case where the user moves outdoors on foot, the display position of the image (for example, an arrow) indicating the traveling direction may be on the sidewalk. For example, the terminal device 20 may superimpose an image (for example, an arrow) indicating the traveling direction on a real or on-screen sidewalk. FIG. 17 is a diagram illustrating a state in which an image indicating a traveling direction is superimposed on a sidewalk. FIG. 17 is an image in which a hatched region is superimposed. For example, an information processing device such as the terminal device 20 and the server 10 classifies an image into a plurality of regions such as a roadway and a sidewalk on the basis of an image region classification technology such as semantic segmentation, and superimposes an image indicating a traveling direction on the region of the sidewalk. Furthermore, in a case where the user moves outdoors on foot, the terminal device 20 may display the store information without displaying the vehicle-related information and the product information, for example. The store information is, for example, information such as the name, position, appearance, or business type of the store. Note that the terminal device 20 may display information of a destination store as the store information, or may display information of a store near the user. The terminal device 20 may or may not display the traffic information. Note that, in a case where the traffic information is displayed, the terminal device 20 may display information regarding a car, a bus, or dispatch as the traffic information. Furthermore, in a case where it is known that the user uses public transportation, uses a car rental (including dispatch), or the like, the terminal device 20 may display information regarding these (for example, time and fee) as the traffic information.

### (2) Walking State (Indoor)

In a case where the user moves indoors on foot, the terminal device 20 may not display the image (for example, an arrow) indicating the traveling direction. Furthermore, in a case where the user moves outdoors on foot, the terminal device 20 may display the product information (information of products sold in the store) without displaying the vehicle-related information, the traffic information, and the store information, for example. In this case, in the terminal device 20, the store in which the product information is displayed may be a store that is a destination, or may be a store on a floor on which the user is moving.

### (3) Riding State (Manual Driving)

In a case where the user manually drives the vehicle, the display position of the image (for example, an arrow) indicating the traveling direction may be on the road. For example, the terminal device 20 and/or the in-vehicle device 30 may superimpose an image (for example, an arrow) indicating the traveling direction on a real or on-screen road. FIG. 18 is a diagram illustrating a state in which an image indicating a traveling direction is superimposed on a roadway. FIG. 18 is an image in which a hatched region is superimposed. For example, an information processing device such as the terminal device 20, the in-vehicle device 30, or the server 10 classifies an image into a plurality of regions such as a roadway and a sidewalk on the basis of an image region classification technology such as semantic segmentation, and superimposes an image indicating a traveling direction on the region of the roadway. Furthermore, in a case where the user manually drives the vehicle, the terminal device 20 may display the vehicle-related information and the traffic information without displaying the store information and the product information, for example. The vehicle-related information is, for example, information such as a speed or remaining energy of the vehicle. The traffic information is, for example, traffic information regarding a destination or traffic information regarding a road on which the vehicle is currently moving. The traffic information regarding the destination may be, for example, information of a congestion status of a parking lot of a store as a destination. Furthermore, the traffic information regarding the road on which the vehicle is currently moving may be, for example, congestion information of a road on a route to a destination.

### (4) Riding State (Automated Driving)

In a case where the user automatedly drives the vehicle, the display position of the image (for example, an arrow) indicating the traveling direction may be on the road. For example, as illustrated in FIG. 18, for example, the terminal device 20 and/or the in-vehicle device 30 may superimpose an image (for example, an arrow) indicating the traveling direction on a real or on-screen road. Furthermore, in a case where the vehicle on which the user rides is automatedly driven, the terminal device 20 and/or the in-vehicle device 30 may display the vehicle-related information and the store information without displaying the traffic information and the product information, for example. Note that the terminal device 20 and/or the in-vehicle device 30 may display information of a destination store as the store information, or may display information of a store on a route to the destination. In a case where the information of the store on the route is displayed, the store in which the store information is displayed may be a store related to the destination store (for example, stores having the same or similar business type, services, or sales products).

Note that, in a case where the user automatedly drives the vehicle, the terminal device 20 and/or the in-vehicle device 30 may not display the navigation so that the user can relax, for example. At this time, the terminal device 20 and/or the in-vehicle device 30 may display content such as a moving image instead of navigation. Note that, in a case where the navigation is displayed on the AR device such as AR glasses and the region where the navigation is displayed is in the transmissive state, the terminal device 20 and/or the in-vehicle device 30 may set the region where the content is displayed to the non-transmissive state in a case where the content is displayed instead of the navigation, for example, in order to allow the user to be immersed in the content.

### <3-5. Navigation Processing>

Next, the operation of the navigation system 1 will be described using a flowchart.

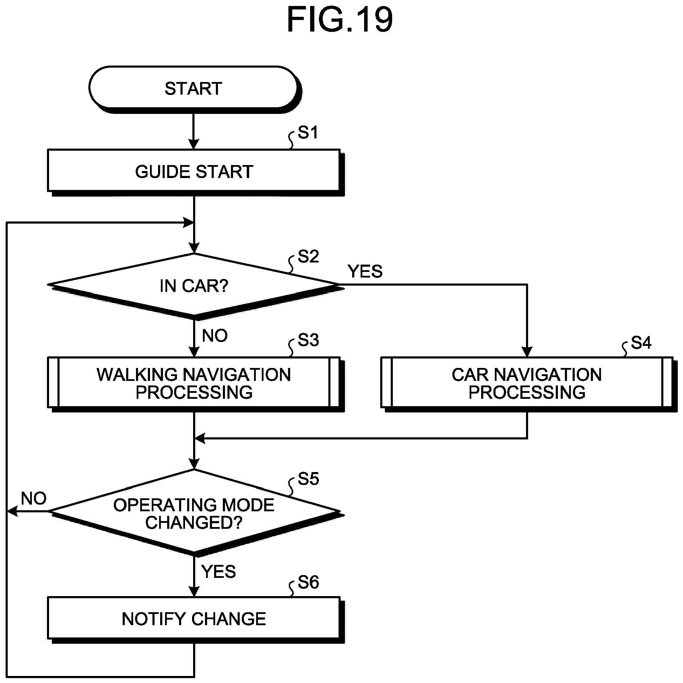

FIG. 19 is a flowchart illustrating navigation processing according to the present embodiment. When the user performs an operation for starting navigation, the control unit 23 of the terminal device 20 starts navigation processing. Note that, in the following description, it is assumed that the terminal device 20 includes AR glasses and the user wears the AR glasses. The navigation processing will be described below with reference to the flowchart of FIG. 19.

First, when the user performs an input operation (for example, input of a destination, and the like) for starting navigation, the control unit 23 of the terminal device 20 starts processing for navigation to the user (guidance to a destination) on the basis of the user's input (step S1). Note that the operation performed by the user may include an operation related to a request for dispatch. The transmission unit 232 of the terminal device 20 may transmit a dispatch request to the server 10 according to a user's operation. The dispatch processing unit 135 of the server 10 may perform processing for dispatch in response to the dispatch request. The transmission unit 132 of the server 10 may transmit the information regarding dispatch to the terminal device 20.

Subsequently, the acquisition unit 231 of the terminal device 20 acquires information regarding the movement state of the user. The information regarding the movement state includes information that enables the user to determine which state of a plurality of states including at least a riding state and a walking state the user is in. At this time, the information regarding the movement state may be information regarding the movement state of the user determined by the detection unit 234 of the terminal device 20 on the basis of the information from the sensor unit 26 and/or the communication unit 21. Then, the determination unit 233 of the terminal device 20 determines whether or not the user is in a car on the basis of the information regarding the movement state (step S2).

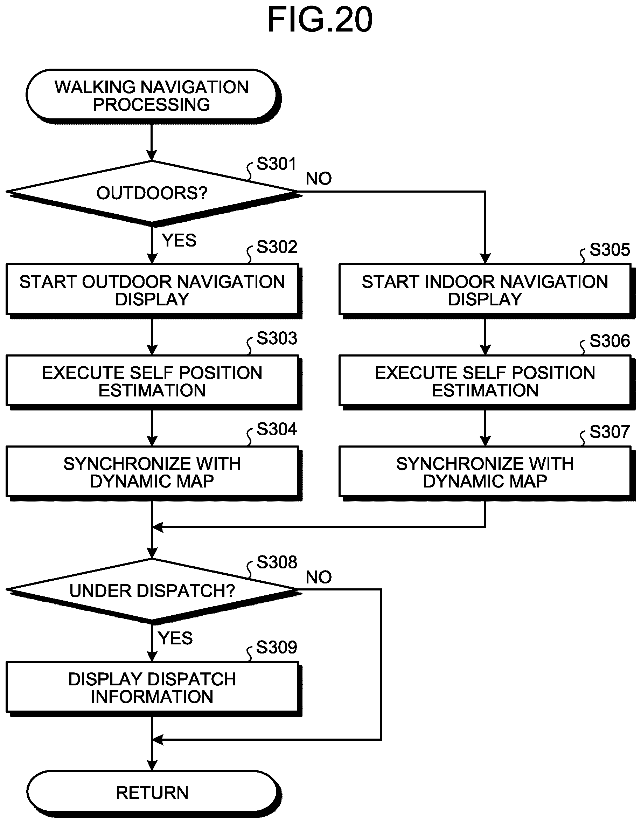

In a case where the user is not in a car (step S2: No), that is, in a case where the movement state of the user is the walking state, the control unit 23 of the terminal device 20 starts the walking navigation processing (step S3). FIG. 20 is a flowchart for explaining walking navigation processing. Hereinafter, the walking navigation processing will be described with reference to the flowchart of FIG. 20.

First, the acquisition unit 231 of the terminal device 20 acquires information regarding the movement state of the user. The information regarding the movement state includes information that makes it possible to determine whether or not the user is walking indoors. The information regarding the movement state may be information regarding the movement state of the user determined by the detection unit 234 of the terminal device 20 on the basis of the information from the sensor unit 26 and/or the communication unit 21. Then, the determination unit 233 of the terminal device 20 determines whether or not the user is outdoors on the basis of the information regarding the movement state (step S301).

In a case where the user is outdoors (step S301: Yes), the display control unit 235 of the terminal device 20 starts display of the outdoor navigation (step S302). Various methods can be used as a method of outdoor navigation. For example, the terminal device 20 may use simultaneous localization and mapping (SLAM) in performing outdoor navigation processing. At this time, the detection unit 234 of the terminal device 20 may estimate the self position and posture of the terminal device 20 on the basis of information from the sensor unit 26 of the terminal device (step S303). In estimating the self position and the posture, the detection unit 234 may use information from the communication unit 21 and the imaging unit 27 in addition to the information from the sensor unit 26. Then, the terminal device 20 may synchronize its current state with the dynamic map on the basis of the estimation result of the self position and posture or the like (step S304). Then, the display control unit 235 of the terminal device 20 performs outdoor navigation processing on the basis of the result of synchronization with the dynamic map. For example, if the user is wearing AR glasses, the display control unit 235 superimposes an arrow indicating a traveling direction on a real sidewalk.

Note that the terminal device 20 may acquire the dynamic map from the server 10. For example, the acquisition unit 231 of the terminal device 20 acquires the dynamic map (sidewalk) from the server 10 via the communication unit 21. Then, the terminal device 20 may synchronize its current state with the dynamic map on the dynamic map acquired from the server 10. Furthermore, the transmission unit 232 of the terminal device 20 may transmit information from the sensor unit 26 or the imaging unit 27 to the server 10. Then, the update unit 134 of the server 10 may update the dynamic map on the basis of the information from the terminal device 20.

Returning to step S301, in a case where the user is indoors (step S301: No), the display control unit 235 of the terminal device 20 starts display of the indoor navigation (step S305). Various methods can be used as a method of indoor navigation. For example, the terminal device 20 may use SLAM in performing indoor navigation processing. At this time, the detection unit 234 of the terminal device 20 may estimate the self position and posture of the terminal device 20 on the basis of information from the sensor unit 26 of the terminal device 20 (step S306). In estimating the self position and the posture, the detection unit 234 may use information from the communication unit 21 and the imaging unit 27 in addition to the information from the sensor unit 26. Then, the terminal device 20 may synchronize its current state with the dynamic map on the basis of the self position estimation result or the like (step S307). Then, the display control unit 235 of the terminal device 20 performs indoor navigation processing on the basis of the result of synchronization with the dynamic map. For example, if the user is wearing AR glasses, the display control unit 235 superimposes an arrow indicating a traveling direction on a real passage. Note that, as in the case of the outdoor navigation, the terminal device 20 may acquire the dynamic map from the server 10.

Subsequently, the determination unit 233 of the terminal device 20 determines whether or not the vehicle is under dispatch (step S308). For example, the determination unit 233 determines whether the dispatch request has been made to the server 10 in step S1. In a case where the vehicle is not dispatched (step S308: No), the control unit 23 of the terminal device 20 returns the process to the navigation processing of FIG. 19. On the other hand, in a case where the vehicle is dispatched (step S308: Yes), the display control unit 235 of the terminal device 20 displays the dispatch information on the basis of, for example, the information regarding dispatch transmitted from the server 10. When the dispatch information is displayed, the control unit 23 of the terminal device 20 returns the process to the navigation processing of FIG. 19.

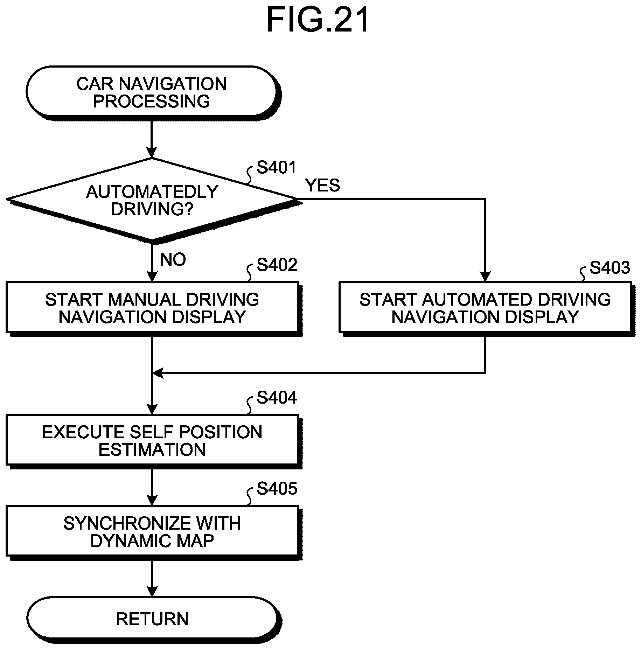

Referring back to FIG. 19, in a case where the user is in the vehicle (step S2: Yes), that is, in a case where the movement state of the user is the riding state, the control unit 23 of the terminal device 20 starts the car navigation processing (step S4). FIG. 21 is a flowchart for explaining car navigation processing. Hereinafter, the car navigation processing will be described with reference to the flowchart of FIG. 21.

First, the acquisition unit 231 of the terminal device 20 acquires information regarding the movement state of the user. The information regarding the movement state includes information that enables determination as to whether or not the vehicle on which the user rides is in an automated driving state. Then, the determination unit 233 of the terminal device 20 discriminates whether or not the car on which the user rides is in a state of automated driving on the basis of the information regarding the movement state (step S401).

In a case where the car on which the user rides is not in the automated driving state (step S401: No), that is, in a case where the user is manually driving the car, the display control unit 235 of the terminal device 20 starts display of the manual driving navigation (step S402). On the other hand, in a case where the car on which the user rides is in the automated driving state (step S401: Yes), the display control unit 235 of the terminal device 20 starts display of the automated driving navigation (step S403).

Various methods can be used as a method of car navigation (manual driving navigation and automated driving navigation). For example, the terminal device 20 may use SLAM in performing a process of car navigation. At this time, the detection unit 234 of the terminal device 20 may estimate the self position and posture of the terminal device 20 on the basis of information from the sensor unit 26 of the terminal device (step S404). In estimating the self position and the posture, the detection unit 234 may use information from the communication unit 21 and the imaging unit 27 in addition to the information from the sensor unit 26. Then, the terminal device 20 may synchronize its current state and the state of the surrounding environment with the dynamic map on the basis of the estimation results of the self position and posture, and the like (step S405). Then, the display control unit 235 of the terminal device 20 performs a car navigation processing on the basis of the result of synchronization with the dynamic map. For example, if the user is wearing AR glasses, the display control unit 235 superimposes an arrow indicating a traveling direction on a real roadway. Note that, as in the case of the outdoor navigation, the terminal device 20 may acquire the dynamic map from the server 10. Then, the control unit 23 of the terminal device 20 returns the process to the navigation processing of FIG. 19.

Returning to FIG. 19, the control unit 23 of the terminal device 20 determines whether or not the operation mode (navigation mode) has been changed in the course of the processing from step S2 to step S4 (step S5). In a case where there is no change (step S5: No), the control unit 23 returns the process to step S2. On the other hand, in a case where there is a change (step S5: Yes), the display control unit 235 of the terminal device 20 notifies the user that there is a change (step S6). For example, the display control unit 235 may make the change notification by a display icon or may make the change notification by voice. When the change notification is completed, the control unit 23 returns the process to step S2.

### <<4. Modifications>>

The above-described embodiments are examples, and various modifications and applications are possible.

For example, in the above-described embodiments, the processing in each navigation mode is performed by the terminal device 20, but a part or all of the processing may be performed by another device such as the in-vehicle device 30. For example, a part or all of the processing of the car navigation such as the manual driving navigation, the first automated driving navigation, and the second automated driving navigation may be performed by the in-vehicle device 30. In this case, the description of the terminal device 20, the control unit 23, the acquisition unit 231, the transmission unit 232, the determination unit 233, the detection unit 234, the display control unit 235, and the like described above can be appropriately replaced with the in-vehicle device 30, the control unit 33, the acquisition unit 331, the transmission unit 332, the determination unit 333, the detection unit 334, the display control unit 335, and the like. Furthermore, description of the communication unit 21, the storage unit 22, the input unit 24, the output unit 25, the sensor unit 26, and the imaging unit 27 can also be replaced with the communication unit 31, the storage unit 32, the input unit 34, the output unit 35, the sensor unit 36, and the imaging unit 37 as appropriate.

Furthermore, a part or all of the processing in each navigation mode may be performed by the server 10 on the basis of, for example, information from the terminal device 20 and/or the in-vehicle device 30. In this case, the description of the terminal device 20, the control unit 23, the acquisition unit 231, the transmission unit 232, the determination unit 233, the detection unit 234, the display control unit 235, and the like described above can be replaced with the server 10, the control unit 13, the acquisition unit 131, the transmission unit 132, the determination unit 133, and the like as appropriate.

In addition, in the above-described embodiments, walking or movement by car (automobile) has been described as a moving means to be a navigation target of the present embodiment, but the moving means is not limited to walking or movement by car. The moving means to be a navigation target of the present embodiment may include, for example, movement in a vehicle other than a car. The vehicle is, for example, a bus, a truck, a bicycle, a motorcycle, a train, a linear motor car, or the like. In this case, the above description of "car" can be replaced with "vehicle" as appropriate. For example, the description of the display device of the car can be replaced with a display device of a vehicle.

The moving means is not limited to the vehicle, and may be a moving body other than the vehicle. The moving body may be, for example, a ship such as a passenger ship, a cargo ship, or a hovercraft). In addition, the moving body may be a moving body (for example, underwater vessels such as submarines, submersibles, and unmanned underwater vehicles) that moves under water. Furthermore, the moving body may be a moving body (for example, an aircraft such as an airplane, an airship, or a drone) that moves in the atmosphere. Note that the concept of an aircraft includes not only heavy aircraft such as an airplane and a glider but also light aircraft such as a balloon and an airship. In addition, the concept of an aircraft includes not only a heavy aircraft and a light aircraft but also a rotorcraft such as a helicopter and an autogyroscope. In a case where the moving means is a moving body, in this case, the above description of "car" can be appropriately replaced with "moving body".

Furthermore, in the above-described embodiments, the navigation is displayed on the AR glasses worn by the user as an example, but the description of the "AR glasses" can be appropriately replaced with an "AR device", "MR glasses", or an "MR device".

The control device that controls the server 10, the terminal device 20, or the in-vehicle device 30 of the present embodiment may be realized by a dedicated computer system or a general-purpose computer system.

For example, a communication program for executing the above-described operations is stored and distributed in a computer-readable recording medium such as an optical disk, a semiconductor memory, a magnetic tape, or a flexible disk. Then, for example, the program is installed in a computer, and the above-described processing is executed to configure the control device. At this time, the control device may be the server 10, the terminal device 20, or a device (for example, a personal computer) outside the in-vehicle device 30. Furthermore, the control device may be the server 10, the terminal device 20, or a device (for example, the control unit 13, the control unit 23, or the control unit 33) inside the in-vehicle device 30.

In addition, the communication program may be stored in a disk device included in a server device on a network such as the Internet so that the communication program can be downloaded to a computer. In addition, the above-described functions may be realized by cooperation of an operating system (OS) and application software. In this case, a portion other than the OS may be stored in a medium and distributed, or a portion other than the OS may be stored in a server device and downloaded to a computer.

Among the processes described in the above embodiments, all or a part of the processes described as being performed automatically can be performed manually, or all or a part of the processes described as being performed manually can be performed automatically by a known method. In addition, the processing procedure, specific name, and information including various data and parameters illustrated in the document and the drawings can be arbitrarily changed unless otherwise specified. For example, the various types of information illustrated in each figure are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like.

In addition, the above-described embodiments can be appropriately combined in a region in which the processing contents do not contradict each other. Furthermore, the order of each step illustrated in the flowchart of the above-described embodiments can be appropriately changed.

Furthermore, for example, the present embodiment can be implemented as any configuration constituting an device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected via a network and one device in which a plurality of modules is housed in one housing are both systems.

Furthermore, for example, the present embodiment can adopt a configuration of cloud computing in which one function is shared and processed by a plurality of devices in cooperation via a network.

### <<5. Conclusion>>

As described above, according to an embodiment of the present disclosure, the navigation system 1 acquires information regarding the movement state of the user, and controls the display mode regarding navigation to the user on the basis of the information regarding the movement state of the user. For example, the navigation system 1 switches the display mode regarding navigation to the user to a display mode according to the movement state of the user on the basis of the information regarding the movement state of the user. More specifically, in a case where the user is in the riding state, the navigation system 1 controls the display mode so as to be a display mode according to the riding state, and in a case where the user is in the walking state, the navigation system 1 controls the display mode of the navigation to the user so as to be a display mode according to the walking state.

As a result, even in a case where the user moves to the destination by combining a plurality of moving means, the navigation system 1 can provide navigation according to the moving means. Moreover, since the navigation is switched according to the change in the movement state, the navigation system 1 can provide the user with seamless navigation. As a result, the navigation system 1 can provide highly convenient navigation for the user.

Although the embodiments of the present disclosure have been described above, the technical scope of the present disclosure is not limited to the above-described embodiments as it is, and various modifications can be made without departing from the gist of the present disclosure. In addition, components of different embodiments and modifications may be appropriately combined.

Furthermore, the effects of each embodiment described in the present specification are merely examples and are not limited, and other effects may be provided.

Note that the present technology can also have the following configurations.
(1) An information processing device comprising:
   an acquisition unit that acquires information regarding a movement state of a user; and
   a display control unit that controls a display mode regarding navigation to the user on a basis of the information regarding the movement state of the user.
(2) The information processing device according to (1), wherein
   the display control unit switches the display mode regarding the navigation to the user to a display mode according to the movement state of the user on a basis of the information regarding the movement state of the user.
(3) The information processing device according to (2), wherein
   the information regarding the movement state includes information that enables the user to determine which state of a plurality of states including at least a riding state and a walking state the user is in, and
   the display control unit
   controls the display mode to be the display mode according to the riding state in a case where the user is in the riding state, and
   controls the display mode of the navigation to the user to be the display mode according to the walking state in a case where the user is in the walking state.
(4) The information processing device according to (3), wherein
   the display control unit controls the display mode such that navigation indicating a traveling direction is superimposed on a real or on-screen roadway as the navigation to the user in a case where the user is in the riding state.
(5) The information processing device according to (4), wherein
   the display control unit controls the display mode to display traffic information regarding a destination or traffic information regarding a road on which the user is currently moving in a case where the user is in the riding state.
(6) The information processing device according to (4) or (5), wherein
   the display control unit controls the display mode to display vehicle information regarding a vehicle on which the user rides in a case where the user is in the riding state.
(7) The information processing device according to (6), wherein
   the vehicle information includes information on a speed or remaining energy of the vehicle.
(8) The information processing device according to any one of (3) to (7), wherein
   the information regarding the movement state includes information that makes it possible to determine whether or not a vehicle on which the user rides is in an automated driving state in a case where the user is in the riding state, and
   the display control unit controls the display mode to display information of a store on a route to a destination in a case where the vehicle on which the user rides is in the automated driving state.
(9) The information processing device according to any one of (3) to (7), wherein
   the information regarding the movement state includes information that makes it possible to determine whether or not a vehicle on which the user rides is in an automated driving state in a case where the user is in the riding state, and
   the display control unit does not display the navigation in a case where the vehicle on which the user rides is in the automated driving state.
(10) The information processing device according to (9), wherein
   the navigation is displayed on an augmented reality (AR) device worn by the user, and
   in a case where the vehicle on which the user is riding is in the automated driving state, the display control unit displays a content instead of the navigation and sets a region in which the content is displayed to a non-transmissive state.
(11) The information processing device according to any one of (3) to (7), wherein
   the navigation including route information is displayed on an augmented reality (AR) device worn by the user,
   the information regarding the movement state includes information that makes it possible to determine whether a vehicle on which the user rides is in an automated driving state or a manual driving state in a case where the user is in the riding state, and
   in a case where the vehicle on which the user rides is in the manual driving state, the display control unit makes a size of a display region in which the route information is displayed smaller than a size of the display region in a case where the vehicle is in the automated driving state.
(12) The information processing device according to (11), wherein the display region is in a transmissive state.
(13) The information processing device according to any one of (3) to (12), wherein
   the display control unit controls the display mode such that navigation indicating a traveling direction is superimposed on a real or on-screen sidewalk as the navigation to the user in a case where the user is in the walking state.
(14) The information processing device according to (13), wherein
   the display control unit controls the display mode to display information of a store near the user in a case where the user is in the walking state.
(15) The information processing device according to any one of (3) to (14), wherein
   the information regarding the movement state includes information that makes it possible to determine whether or not the user is walking indoors in a case where the user is in the walking state, and
   in a case where the user is walking indoors, the display control unit controls the display mode to display product information of a store indoors.
(16) The information processing device according to any one of (3) to (15), wherein
   the display control unit displays the navigation on an AR device worn by the user in a case where the user is in the walking state, and displays the navigation on a display device of a vehicle on which the user rides in a case where the user is in the riding state.
(17) The information processing device according to any one of (3) to (15), wherein
   the display control unit displays the navigation on an augmented reality (AR) device worn by the user both in a case where the user is in the walking state and in a case where the user is in the riding state.
(18) The information processing device according to any one of (3) to (15), further comprising
   a detection unit that detects whether or not a plurality of persons is on a vehicle on which the user rides, wherein
   the display control unit acquires a detection result as to whether or not a plurality of persons is on the vehicle in a case where the user is in the riding state, displays the navigation on a display device of the vehicle in a case where the plurality of persons is on the vehicle, and displays the navigation on an augmented reality (AR) device worn by the user without displaying the navigation on the display device of the vehicle in a case where the plurality of persons is not on the vehicle.
(19) An information processing method comprising:
   acquiring information regarding a movement state of a user; and
   controlling a display mode regarding navigation to the user on a basis of the information regarding the movement state of the user.
(20) A program for causing a computer to function as:
   an acquisition unit that acquires information regarding a movement state of a user; and
   a display control unit that controls a display mode regarding navigation to the user on a basis of the information regarding the movement state of the user.

### Reference Signs List

1 NAVIGATION SYSTEM
10 SERVER
20 TERMINAL DEVICE
30 IN-VEHICLE DEVICE
11, 21, 31 COMMUNICATION UNIT
12, 22, 32 STORAGE UNIT
13, 23, 33 CONTROL UNIT
24, 34 INPUT UNIT
25, 35 OUTPUT UNIT
26, 36 SENSOR UNIT
27, 37 IMAGING UNIT
131, 231, 331 ACQUISITION UNIT
132, 232, 332 TRANSMISSION UNIT
133, 233, 333 DETERMINATION UNIT
134 UPDATE UNIT
135 DISPATCH PROCESSING UNIT
234, 334 DETECTION UNIT
235, 335 DISPLAY CONTROL UNIT

## Claims

1. An information processing device comprising:
an acquisition unit that acquires information regarding a movement state of a user; and
a display control unit that controls a display mode regarding navigation to the user on a basis of the information regarding the movement state of the user.

2. The information processing device according to claim 1, wherein
the display control unit switches the display mode regarding the navigation to the user to a display mode according to the movement state of the user on a basis of the information regarding the movement state of the user.

3. The information processing device according to claim 2, wherein
the information regarding the movement state includes information that enables the user to determine which state of a plurality of states including at least a riding state and a walking state the user is in, and
the display control unit
controls the display mode to be the display mode according to the riding state in a case where the user is in the riding state, and
controls the display mode of the navigation to the user to be the display mode according to the walking state in a case where the user is in the walking state.

4. The information processing device according to claim 3, wherein
the display control unit controls the display mode such that navigation indicating a traveling direction is superimposed on a real or on-screen roadway as the navigation to the user in a case where the user is in the riding state.

5. The information processing device according to claim 4, wherein
the display control unit controls the display mode to display traffic information regarding a destination or traffic information regarding a road on which the user is currently moving in a case where the user is in the riding state.

6. The information processing device according to claim 4, wherein
the display control unit controls the display mode to display vehicle information regarding a vehicle on which the user rides in a case where the user is in the riding state.

7. The information processing device according to claim 6, wherein
the vehicle information includes information on a speed or remaining energy of the vehicle.

8. The information processing device according to claim 3, wherein
the information regarding the movement state includes information that makes it possible to determine whether or not a vehicle on which the user rides is in an automated driving state in a case where the user is in the riding state, and
the display control unit controls the display mode to display information of a store on a route to a destination in a case where the vehicle on which the user rides is in the automated driving state.

9. The information processing device according to claim 3, wherein
the information regarding the movement state includes information that makes it possible to determine whether or not a vehicle on which the user rides is in an automated driving state in a case where the user is in the riding state, and
the display control unit does not display the navigation in a case where the vehicle on which the user rides is in the automated driving state.

10. The information processing device according to claim 9, wherein
the navigation is displayed on an augmented reality (AR) device worn by the user, and
in a case where the vehicle on which the user is riding is in the automated driving state, the display control unit displays a content instead of the navigation and sets a region in which the content is displayed to a non-transmissive state.

11. The information processing device according to claim 3, wherein
the navigation including route information is displayed on an augmented reality (AR) device worn by the user,
the information regarding the movement state includes information that makes it possible to determine whether a vehicle on which the user rides is in an automated driving state or a manual driving state in a case where the user is in the riding state, and
in a case where the vehicle on which the user rides is in the manual driving state, the display control unit makes a size of a display region in which the route information is displayed smaller than a size of the display region in a case where the vehicle is in the automated driving state.

12. The information processing device according to claim 11, wherein
the display region is in a transmissive state.

13. The information processing device according to claim 3, wherein
the display control unit controls the display mode such that navigation indicating a traveling direction is superimposed on a real or on-screen sidewalk as the navigation to the user in a case where the user is in the walking state.

14. The information processing device according to claim 13, wherein
the display control unit controls the display mode to display information of a store near the user in a case where the user is in the walking state.

15. The information processing device according to claim 3, wherein
the information regarding the movement state includes information that makes it possible to determine whether or not the user is walking indoors in a case where the user is in the walking state, and
in a case where the user is walking indoors, the display control unit controls the display mode to display product information of a store indoors.

16. The information processing device according to claim 3, wherein
the display control unit displays the navigation on an AR device worn by the user in a case where the user is in the walking state, and displays the navigation on a display device of a vehicle on which the user rides in a case where the user is in the riding state.

17. The information processing device according to claim 3, wherein
the display control unit displays the navigation on an augmented reality (AR) device worn by the user both in a case where the user is in the walking state and in a case where the user is in the riding state.

18. The information processing device according to claim 3, further comprising
a detection unit that detects whether or not a plurality of persons is on a vehicle on which the user rides, wherein
the display control unit acquires a detection result as to whether or not a plurality of persons is on the vehicle in a case where the user is in the riding state, displays the navigation on a display device of the vehicle in a case where the plurality of persons is on the vehicle, and displays the navigation on an augmented reality (AR) device worn by the user without displaying the navigation on the display device of the vehicle in a case where the plurality of persons is not on the vehicle.

19. An information processing method comprising:
acquiring information regarding a movement state of a user; and
controlling a display mode regarding navigation to the user on a basis of the information regarding the movement state of the user.

20. A program for causing a computer to function as:
an acquisition unit that acquires information regarding a movement state of a user; and
a display control unit that controls a display mode regarding navigation to the user on a basis of the information regarding the movement state of the user.
